(19) Europäisches Patentamt
European Patent Office
Office européen des brevets

(11) **EP 4 329 432 A1**

(12) **EUROPEAN PATENT APPLICATION**
published in accordance with Art. 153(4) EPC

(43) Date of publication:
**28.02.2024 Bulletin 2024/09**

(21) Application number: **22791799.4**

(22) Date of filing: **21.04.2022**

(51) International Patent Classification (IPC):
*H05B 45/40* (2020.01)     *B60Q 1/04* (2006.01)
*F21S 41/663* (2018.01)     *H05B 45/10* (2020.01)
*H05B 45/345* (2020.01)     *H05B 45/3725* (2020.01)
*F21W 102/155* (2018.01)     *F21Y 115/10* (2016.01)

(52) Cooperative Patent Classification (CPC):
**H05B 45/44; B60Q 1/04; F21S 41/663;**
**H05B 45/10; H05B 45/345; H05B 45/3725;**
**H05B 45/40; H05B 47/17;** F21W 2102/155;
F21Y 2115/10

(86) International application number:
**PCT/JP2022/018483**

(87) International publication number:
**WO 2022/225028 (27.10.2022 Gazette 2022/43)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **23.04.2021   JP 2021073626**
**27.07.2021   JP 2021122718**
**27.07.2021   JP 2021122719**

(71) Applicant: **KOITO MANUFACTURING CO., LTD.**
**Minato-ku**
**Tokyo 108-8711 (JP)**

(72) Inventor: **ICHIKAWA, Tomoyuki**
**Shizuoka-shi Shizuoka 424-8764 (JP)**

(74) Representative: **Algemeen Octrooi- en**
**Merkenbureau B.V.**
**P.O. Box 645**
**5600 AP Eindhoven (NL)**

(54) **VEHICLE LIGHTING**

(57)     When a power supply voltage $V_{IN}$ is supplied to an input terminal $V_{IN}$, a first constant current driver 210 supplies a first driving current $I_{OUT1}$ to the anode of a first semiconductor light source 101. A first switch SW1 is provided between the first semiconductor light source 101 and a second semiconductor light source 102, and a second switch SW2 between the first semiconductor light source 101 and a third semiconductor light source 103. When a switching terminal SEL has a high impedance or low level, a switching circuit 220 turns the first switch SW1 on and the second switch SW2 off. When a switching voltage $V_{SEL}$ is supplied to the switching terminal SEL, the switching circuit 220 turns the first switch off and the second switch SW2 on, and supplies a second driving voltage $I_{OUT2}$ smaller than the first driving current $I_{OUT1}$ to the second semiconductor light source 102.

FIG. 3

**Description**

[TECHNICAL FIELD]

The present disclosure relates to a lamp to be employed in an automobile or the like.

[BACKGROUND ART]

An automotive lamp (e.g., headlamp) has multiple functions, such as a high beam, low beam, clearance lamp (position lamp), Daytime Running Lamp (DRL), etc.

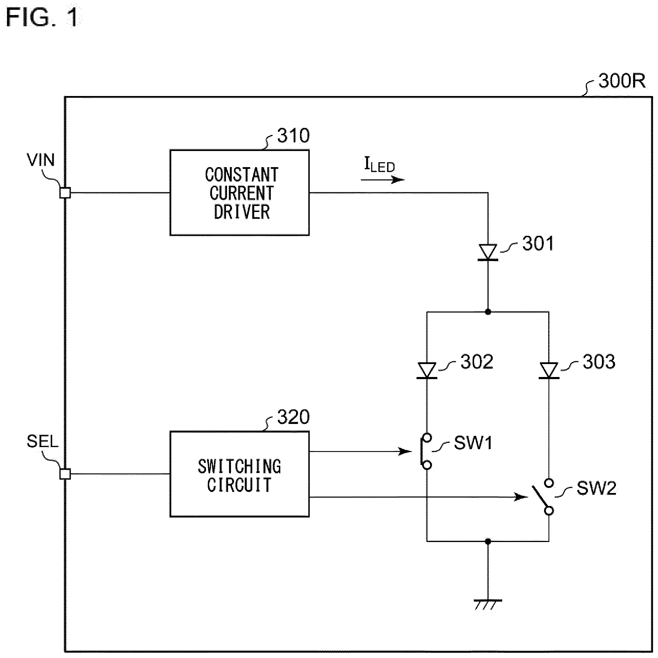

Fig. 1 is a circuit diagram of an automotive lamp that is switchable between a high-beam mode and a low-beam mode. An automotive lamp 300R includes LEDs 301 through 303, switches SW1 and SW2, a constant current driver 310, and a switching circuit 320. The automotive lamp 300R includes an interface having the same configuration as that of a conventional bi-halogen lamp. Specifically, the automotive lamp 300R includes a main input terminal VIN and a high/low switching terminal SEL. When an input voltage $V_{IN}$ (battery voltage $V_{BAT}$) is supplied to the input terminal VIN, the automotive lamp 300R is turned on in a mode that corresponds to the switching terminal SEL. Specifically, in a state in which the switching terminal SEL is set to a low level (no input, high impedance), the automotive lamp 300R is turned on as a low beam. On the other hand, in a state in which a high level (battery voltage) is input to the switching terminal SEL, the automotive lamp 300R is turned on as a high beam.

When the input voltage $V_{IN}$ is supplied, the constant current driver 310 outputs a driving current $I_{LED}$. When the switching terminal SEL is set to the low level, the switching circuit 320 turns on the switch SW1 and turns off the switch SW2. In this state, the driving current ILED flows through the LEDs 301 and 302. Conversely, when the switching terminal SEL is set to the high level, the switching circuit 320 turns off the switch SW1 and turns on the switch SW2. In this state, the driving current $I_{LED}$ flows through the LEDs 301 and 303.

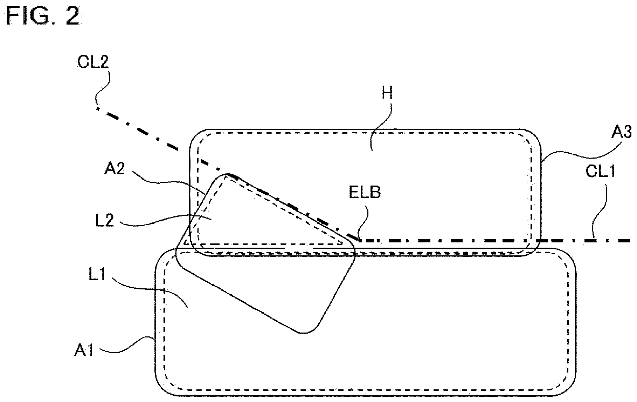

Fig. 2 is a diagram showing an example of the light distribution provided by the automotive lamp 300R shown in Fig. 1. The line of dashes and dots indicates a horizontal cutoff line CL1 and an oblique cutoff line CL2. A low-beam light distribution is formed below the cutoff lines CL1 and CL2. On the other hand, a high-beam light distribution H is formed above the cutoff lines CL1 and CL2. The low-beam region includes a first portion L1 below the horizontal line that passes through an elbow point ELB, and a second portion L2 above it.

For example, the LED 301 shown in Fig. 1 is turned on in both the high-beam mode and the low-beam mode. Accordingly, an optical system of the automotive lamp 300R is designed such that the output light from the LED 301 is emitted to a region below the horizontal cutoff line (the region A1 shown in Fig. 2, which will be referred to as a "low-beam diffusion region"). Furthermore, the optical system is designed such that the output light of the LED 302 shown in Fig. 1 is emitted to a region A2 shown in Fig. 2 (which will be referred to as a "low-beam focusing region"), and the output light of the LED 303 shown in Fig. 1 is emitted to a region A3 shown in Fig. 2 (which will be referred to as a "high-beam region").

[Related Art Documents]

[Patent Documents]

[Patent document 1] International Publication WO 2021/020537

[DISCLOSURE OF THE INVENTION]

[PROBLEM TO BE SOLVED BY THE INVENTION]

PROBLEM 1

In the automotive lamp 100 shown in Fig. 1, the LED 302 and the LED 303 are turned on in an exclusive manner. Accordingly, as viewed from the surroundings, a bright portion and a dark portion change between the high-beam mode and the low-beam mode. Such an arrangement has the potential to degrade the appearance.

The present disclosure has been made in view of such a situation. Accordingly, it is an exemplary purpose of an embodiment thereof to provide an automotive lamp that is capable of providing two functions without involving degradation of the appearance.

Also, it is an exemplary purpose of an embodiment of the present disclosure to provide an automotive lamp that is capable of illuminating a minimum field of view even in a low-voltage state.

[MEANS TO SOLVE THE PROBLEM]

1. An automotive lamp according to an embodiment of the present disclosure includes: a first semiconductor light source coupled between a first node and a second node; a second semiconductor light source coupled between the second node and a third node so as to form a first path; a third semiconductor light source coupled between the second node and the third node so as to form a second path parallel to the first path; and a lighting circuit structured to drive the first semiconductor light source, the second semiconductor light source, and the third semiconductor light source. The lighting circuit is structured to be switchable between a first lighting mode in which the first semiconductor light source and the second semiconductor light source are turned on and the third semiconductor light source is turned off, and a second lighting mode in which the first semiconductor light source and the third semiconductor light source are turned on and the second semiconductor light source is turned on so as to be dimmer than in the first lighting mode.

2. An automotive lamp according to an embodiment of the present disclosure includes: a first semiconductor light source coupled between a first node and a second node; a second semiconductor light source coupled between the second node and a third node so as to form a first path; a third semiconductor light source coupled between the second node and the third node so as to form a second path that is parallel to the first path; a lighting circuit structured to receive a power supply voltage, structured to turn on the first semiconductor light source and the second semiconductor light source in a first lighting mode, and to turn on the first semiconductor light source and the third semiconductor light source in a second lighting mode; and a bypass circuit arranged between the second node and the third node, and structured to turn on when the power supply voltage becomes lower than a predetermined first threshold value.

It should be noted that any combination of the components described above, any component described above, or any manifestation described above may be mutually substituted between a method, apparatus, system, and so forth, which are also effective as an embodiment of the present invention.

[ADVANTAGE OF THE PRESENT INVENTION]

With an embodiment of the present disclosure, this allows two functions to be provided without involving degradation in appearance.

[BRIEF DESCRIPTION OF THE DRAWINGS]

Fig. 1 is a circuit diagram of an automotive lamp that is switchable between a high-beam mode and a low-beam mode;
Fig. 2 is a diagram showing an example of a light distribution of the automotive lamp shown in Fig. 1;
Fig. 3 is a circuit diagram of the automotive lamp according to an embodiment 1;
Fig. 4 is an equivalent circuit diagram of the automotive lamp shown in Fig. 3 in a first lighting mode (low-beam mode);
Fig. 5 is an equivalent circuit diagram of the automotive lamp shown in Fig. 3 in a second lighting mode (high-beam mode);
Fig. 6 is a circuit diagram showing a specific example configuration of the automotive lamp;
Figs. 7A through 7C are diagrams each showing a modification of a first switch;
Fig. 8 is a perspective diagram of a light source module which is an example of the automotive lamp;
Fig. 9 is a block diagram showing an automotive lamp according to a modification 1.1;
Fig. 10 is a block diagram showing an automotive lamp according to a modification 1.2;
Fig. 11 is a block diagram showing an automotive lamp according to a modification 1.5;
Fig. 12 is a block diagram showing an automotive lamp according to a modification 1.6;
Fig. 13 is a block diagram showing an automotive lamp according to a modification 1.7;
Fig. 14 is a block diagram of an automotive lamp according to an embodiment 2;
Fig. 15 is a circuit diagram showing a specific example configuration of the automotive lamp shown in Fig. 14;
Fig. 16 is a circuit diagram of an automotive lamp according to a modification 2.1;
Fig. 17 is a block diagram of an automotive lamp according to an embodiment 3;
Fig. 18 is a circuit diagram showing a specific example configuration of the automotive lamp shown in Fig. 17;
Fig. 19 is a circuit diagram of an automotive lamp according to an embodiment 4;
Figs. 20A and 20B are equivalent circuit diagrams in the first lighting mode and the second lighting mode, respectively, in a normal voltage state;

Figs. 21A and 21B are equivalent circuit diagrams in the first lighting mode and the second lighting mode, respectively, in a low-voltage state;

Fig. 22 is a circuit diagram showing a specific example configuration of the automotive lamp shown in Fig. 19;

Fig. 23 is a circuit diagram of an automotive lamp according to an embodiment 5;

Figs. 24A and 24B are equivalent circuit diagrams in the first lighting mode and the second lighting mode in the normal voltage state;

Fig. 25 is a circuit diagram showing a specific example configuration of the automotive lamp shown in Fig. 23;

Figs. 26A through 26C are diagrams each showing a modification of the first switch;

Fig. 27 is a perspective diagram of a light source module which is an example of the automotive lamp;

Fig. 28 is a block diagram showing an automotive lamp according to a modification 5.1;

Fig. 29 is a block diagram showing an automotive lamp according to a modification 5.2;

Fig. 30 is a block diagram showing an automotive lamp according to a modification 5.5;

Fig. 31 is a block diagram showing an automotive lamp according to a modification 5.6;

Fig. 32 is a block diagram showing an automotive lamp according to a modification 5.7;

Fig. 33 is a block diagram of an automotive lamp according to an embodiment 6;

Fig. 34 is a circuit diagram showing a specific example configuration of the automotive lamp shown in Fig. 33;

Fig. 35 is a circuit diagram of an automotive lamp according to a modification 6.1;

Fig. 36 is a block diagram of an automotive lamp according to an embodiment 7; and

Fig. 37 is a circuit diagram showing a specific example configuration of the automotive lamp shown in Fig. 36.

[BEST MODE FOR CARRYING OUT THE INVENTION]

OUTLINE OF EMBODIMENTS

Description will be made regarding the outline of several exemplary embodiments of the present disclosure. The outline is a simplified explanation regarding several concepts of one or multiple embodiments as a preface to the detailed description described later in order to provide a basic understanding of the embodiments. That is to say, the outline described below is by no means intended to restrict the scope of the present invention and the present disclosure. Furthermore, the outline described below is by no means a comprehensive outline of all possible embodiments. That is to say, the outline is by no means intended to identify the indispensable or essential elements of all the embodiments, and is by no means intended to define the scope of a part of or all the embodiments. For convenience, in some cases, an "embodiment" as used in the present specification represents a single or multiple embodiments (examples and modifications) disclosed in the present specification.

An automotive lamp according to one embodiment includes: a first semiconductor light source coupled between a first node and a second node; a second semiconductor light source coupled between the second node and a third node so as to form a first path; a third semiconductor light source coupled between the second node and the third node so as to form a second path parallel to the first path; and a lighting circuit structured to drive the first semiconductor light source, the second semiconductor light source, and the third semiconductor light source. The lighting circuit is structured to be switchable between a first lighting mode in which the first semiconductor light source and the second semiconductor light source are turned on and the third semiconductor light source is turned off, and a second lighting mode in which the first semiconductor light source and the third semiconductor light source are turned on and the second semiconductor light source is turned on so as to be dimmer than in the first lighting mode.

With this arrangement, when the lighting mode is switched from the first lighting mode to the second lighting mode, the third semiconductor light source is additionally turned on while the second semiconductor light source remains turned on. Accordingly, this provides an improved appearance when the automotive lamp is viewed from the surroundings as compared with an arrangement in which the third semiconductor light source is turned on in exchange for turning off the second semiconductor light source.

In one embodiment, the automotive lamp may further include: an input terminal structured to receive a power supply voltage that also has a function as a turn-on instruction; and a switching terminal structured to be controlled by an external circuit such that it is set to a first state in the first lighting mode and to a second state in the second lighting mode. Also, the lighting circuit may include: a first constant current driver having an output node coupled to the first node, and structured to output a first driving current when the power supply voltage is supplied to the input terminal; a first switch coupled between the second node and the second semiconductor light source on the first path; a second switch coupled in series with the third semiconductor light source on the second path; a switching circuit structured to turn on the first switch and turn off the second switch when the switching terminal is set to the first state, and to turn off the first switch and turn on the second switch when the switching terminal is set to the second state; and a second constant current driver structured to supply a second driving current that is smaller than the first driving current to an intermediate node that couples the second semiconductor light source and the first switch when the switching terminal is set to the second state.

When the switching terminal is set to the first state, the lighting mode is set to the first lighting mode. In this state, the first switch is turned on, and the first driving current is supplied to each of the first semiconductor light source and the second semiconductor light source. Accordingly, the first semiconductor light source and the second semiconductor light source are turned on. When the switching terminal is set to the second state, the lighting mode is set to the second lighting mode. In this state, the first switch is turned off, and accordingly, the first driving current does not flow through the second semiconductor light source. Instead, the second constant current driver supplies the second driving current. As a result, in the second lighting mode, such an arrangement is capable of emitting light the second semiconductor light source more dimly than in the first lighting mode.

In one embodiment, the second constant current driver may include a current-limiting resistor arranged between the switching terminal and the intermediate node.

In one embodiment, the second constant current driver may further include a diode arranged in series with the current-limiting resistor between the switching terminal and the intermediate node.

In one embodiment, the second driving current may flow via the switching terminal. In one embodiment, the second driving current may be larger than 10 mA. In this case, this is capable of flowing the second driving current as a contact current through the switching terminal during the second lighting mode. That is to say, the driving current for the second semiconductor light source can also be used as a contact current for preventing oxidation, thereby allowing an increase in unnecessary power consumption to be suppressed.

In one embodiment, in the second state, a non-zero switching voltage may be input to the switching terminal. Also, in the second state, power may be supplied to the second constant current driver via the switching terminal. With this, in the first state, when the switching terminal is set to the high-impedance state or the low-level state (zero voltage), the second constant current driver becomes inactive.

In one embodiment, the automotive lamp may further include: an input terminal structured to receive a power supply voltage that also functions as a turn-on instruction; and a switching terminal structured to be controlled by an external circuit such that it is set to a first state in the first lighting mode and to a second state in the second lighting mode. Also, the lighting circuit may include: a first constant current driver having an output node coupled to the first node, and structured to output a first driving current when the power supply voltage is supplied to the input terminal; a second constant current driver coupled between the second semiconductor light source and the third node on the first path, and structured to be switchable between a constant current state in which a second driving current that is smaller than the first driving current is generated and a full-on state; a second switch coupled in series with the third semiconductor light source on the second path; and a switching circuit structured to set the second constant current driver to the full-on state and turn off the second switch when the switching terminal is set to the first state, and to set the second constant current driver to the constant current state and to turn on the second switch when the switching terminal is set to the second state.

When the switching terminal is set to the first state, the second constant current driver is set to a full-on state. In this state, the first driving current is supplied to the first semiconductor light source and the second semiconductor light source, thereby turning on the first semiconductor light source and the second semiconductor light source (first lighting mode). When the switching terminal is set to the second state, the second driving current generated by the second constant current driver flows through the second semiconductor light source. In this state, the second semiconductor light source emits light dimly. In contrast, the first driving current flows through the first semiconductor light source and the third semiconductor light source. Accordingly, the first semiconductor light source and the third semiconductor light source each emit light brightly (second lighting mode).

In one embodiment, the second constant current driver may include: a first transistor and a first resistor coupled in series between the second semiconductor light source and the third node on the first path; and a feedback circuit structured to be activated when the switching terminal is set to the second state, so as to control a voltage applied to a control terminal of the first transistor such that voltage drop across the first resistor approaches a target voltage. When the switching terminal is set to the second state, the second driving current represented by $I = V_{REF}/R1$ flows through the first transistor. Here, $V_{REF}$ represents the reference voltage, and R1 represents the resistance value of the first resistor. As a result, in the second lighting mode, this allows the second semiconductor light source to emit light more dimly than in the first lighting mode.

In the present specification, the phrase "circuit A outputs current" include both a case in which the circuit A functions as a source of a current, and a case in which current is sunk to the circuit A.

In one embodiment, the automotive lamp may further include: an input terminal structured to receive a power supply voltage that also functions as a turn-on instruction; and a switching terminal structured to be controlled by an external circuit such that it is set to a first state in the first lighting mode and to a second state in the second lighting mode. Also, the lighting circuit may include: a first constant current driver having an output node coupled to the first node, and structured to output a first driving current when the power supply voltage is supplied to the input terminal; a first switch coupled in series with the second semiconductor light source on the first path; a second switch coupled in series with the third semiconductor light source on the second path; and a switch control circuit structured to turn on the first switch and turn off the second switch when the switching terminal is set to the first state, and to switch on and off the first switch according to a pulse signal having a first duty cycle that is lower than 50% and to switch on and off the second switch according to a signal complementary to the pulse signal when the switching terminal is set to the second state.

When the switching terminal is set to the first state, the lighting mode is set to the first lighting mode. In this state, the first switch is turned on, and the first driving current is supplied to the first semiconductor light source and the second semiconductor light source. Accordingly, the first semiconductor light source and the second semiconductor light source are turned on. When the switching terminal is set to the second state, the lighting mode is set to the second lighting mode. In this state, the first switch and the second switch are switched on and off with complementary duty cycles d1 and d2 (d1 < d2). The first driving current is divided into currents with a ratio of d1:d2, which are applied to the second semiconductor light source and the third semiconductor light source, respectively. Accordingly, this allows the second semiconductor light source to emit light more dimly than in the first lighting mode.

In one embodiment, in the second lighting mode, the first constant current driver may increase the first driving current as compared with the first lighting mode.

In one embodiment, when the lighting mode is switched between the first lighting mode and the second lighting mode, a period in which the first switch and the second switch are turned on at the same time may be inserted. This is capable of preventing the field of view from becoming dim due to the first switch and the second switch both turning off at the same time, i.e., due to all the semiconductor light sources turning off. Furthermore, this suppresses the overvoltage state and overcurrent.

In one embodiment, the output light of the first semiconductor light source may form a light distribution pattern having an upper edge that defines a horizontal cutoff line. Also, the output light of the second semiconductor light source may form a light distribution pattern having an upper edge that defines an oblique cutoff line. Also, the output light of the third semiconductor light source may form a light distribution pattern to be used for a high beam.

An automotive lamp according to one embodiment includes: a first semiconductor light source coupled between a first node and a second node; a second semiconductor light source coupled between the second node and a third node so as to form a first path; a third semiconductor light source coupled between the second node and the third node so as to form a second path that is parallel to the first path; a lighting circuit structured to receive a power supply voltage, structured to turn on the first semiconductor light source and the second semiconductor light source in a first lighting mode, and to turn on the first semiconductor light source and the third semiconductor light source in a second lighting mode; and a bypass circuit arranged between the second node and the third node, and structured to turn on when the power supply voltage becomes lower than a predetermined first threshold value.

With this arrangement in which the bypass switch is turned on in the low-voltage state, this is capable of maintaining the light emission of the first semiconductor light source regardless of the lighting mode. This allows a minimum field view to be illuminated.

In one embodiment, the bypass switch may turn off when the power supply voltage exceeds a second threshold value that is higher than the first threshold value. With such an arrangement in which the threshold voltage is provided with hysteresis, this is capable of preventing blinking in the second semiconductor light source or the third semiconductor light source due to the bypass switch repeatedly switching on and off.

In one embodiment, the output light of the first semiconductor light source may form a light distribution pattern having an upper edge that defines a horizontal cutoff line. Also, the output light of the second semiconductor light source may form a light distribution pattern having an upper edge that defines an oblique cutoff line. Also, the output light of the third semiconductor light source may form a light distribution pattern to be used for a high beam. This is capable of maintaining illumination of a region below the horizontal cutoff line even in the low-voltage state.

In one embodiment, in the second lighting mode, the lighting circuit may turn on the second semiconductor light source so as to be dimmer than in the first lighting mode.

With this arrangement, when the lighting mode is switched from the first lighting mode to the second lighting mode, the third semiconductor light source is additionally turned on while the second semiconductor light source remains turned on. This provides an improved appearance when the automotive lamp is viewed from the surroundings as compared with an arrangement in which the third semiconductor light source is turned on in exchange for turning off the second semiconductor light source.

In one embodiment, the automotive lamp may further include: an input terminal structured to receive a power supply voltage that also functions as a turn-on instruction; and a switching terminal structured to be controlled from an external circuit such that it is set to a first state in the first lighting mode and set to a second state in the second lighting mode. Also, the lighting circuit may include: a first constant current driver having an output node coupled to the first node, and structured to output a first driving current when the power supply voltage is supplied to the input terminal; a first switch coupled between the second node and the second semiconductor light source on the first path; a second switch coupled in series with the third semiconductor light source on the second path; a switching circuit structured to turn on the first switch and turn off the second switch when the switching terminal is set to the first state, and to turn off the first switch and turn on the second switch when the switching terminal is set to the second state; and a second constant current driver structured to supply a second driving current that is smaller than the first driving current to an intermediate node that couples the second semiconductor light source and the first switch when the switching terminal is set to the second state.

When the switching terminal is set to the first state, the lighting mode is set to the first lighting mode. In this state, the first switch is turned on, and the first driving current is supplied to each of the first semiconductor light source and the second semiconductor light source. Accordingly, the first semiconductor light source and the second semiconductor light source are turned on. When the switching terminal is set to the second state, the lighting mode is set to the second lighting mode. In this state, the first switch is turned off, and accordingly, the first driving current does not flow through the second semiconductor light source. Instead, the second constant current driver supplies the second driving current. As a result, in the second lighting mode, such an arrangement is capable of emitting light the second semiconductor light source more dimly than in the first lighting mode.

In one embodiment, the automotive lamp may further include: an input terminal structured to receive a power supply voltage that also functions as a turn-on instruction; and a switching terminal structured to be controlled by an external circuit such that it is set to a first state in the first lighting mode and to a second state in the second lighting mode. Also, the lighting circuit may further include: a first constant current driver having an output node coupled to the first node, and structured to output a first driving current when the power supply voltage is supplied to the input terminal; a second constant current driver coupled between the second semiconductor light source and the third node on the first path, and structured to be switchable between a constant current state in which a second driving current that is smaller than the first driving current is generated and a full-on state; a second switch coupled in series with the third semiconductor light source on the second path; and a switching circuit structured to set the second constant current driver to the full-on state and turn off the second switch when the switching terminal is set to the first state, and to set the second constant current driver to the constant current state and to turn on the second switch when the switching terminal is set to the second state.

When the switching terminal is set to the first state, the second constant current driver is set to a full-on state. In this state, the first driving current is supplied to the first semiconductor light source and the second semiconductor light source, thereby turning on the first semiconductor light source and the second semiconductor light source (first lighting mode). When the switching terminal is set to the second state, the second driving current generated by the second constant current driver flows through the second semiconductor light source. In this state, the second semiconductor light source emits light dimly. In contrast, the first driving current flows through the first semiconductor light source and the third semiconductor light source. Accordingly, the first semiconductor light source and the third semiconductor light source each emit light brightly (second lighting mode).

In one embodiment, the automotive lamp may further include: an input terminal structured to receive a power supply voltage that also functions as a turn-on instruction; and a switching terminal structured to be controlled by an external circuit such that it is set to a first state in the first lighting mode and to a second state in the second lighting mode. Also, the lighting circuit may include: a first constant current driver having an output node coupled to the first node, and structured to output a first driving current when the power supply voltage is supplied to the input terminal; a first switch coupled in series with the second semiconductor light source on the first path; a second switch coupled in series with the third semiconductor light source on the second path; and a switch control circuit structured to turn on the first switch and turn off the second switch when the switching terminal is set to the first state, and to switch on and off the first switch according to a pulse signal having a first duty cycle that is lower than 50% and to switch on and off the second switch according to a signal complementary to the pulse signal when the switching terminal is set to the second state.

When the switching terminal is set to the first state, the lighting mode is set to the first lighting mode. In this state, the first switch is turned on, and the first driving current is supplied to the first semiconductor light source and the second semiconductor light source. Accordingly, the first semiconductor light source and the second semiconductor light source are turned on. When the switching terminal is set to the second state, the lighting mode is set to the second lighting mode. In this state, the first switch and the second switch are switched on and off with complementary duty cycles d1 and d2 (d1 < d2). The first driving current is divided into currents with a ratio of d1:d2, which are applied to the second semiconductor light source and the third semiconductor light source, respectively. Accordingly, this allows the second semiconductor light source to emit light more dimly than in the first lighting mode.

EMBODIMENTS

Description will be made below regarding preferred embodiments with reference to the drawings. In each drawing, the same or similar components, members, and processes are denoted by the same reference numerals, and

7

redundant description thereof will be omitted as appropriate. The embodiments have been described for exemplary purposes only, and are by no means intended to restrict the present disclosure and the present invention. Also, it is not necessarily essential for the present invention that all the features or a combination thereof be provided as described in the embodiments.

In the present specification, a state represented by the phrase "the member A is coupled to the member B" includes a state in which the member A is indirectly coupled to the member B via another member that does not substantially affect the electrical connection between them, or that does not damage the functions or effects of the connection between them, in addition to a state in which they are physically and directly coupled.

Similarly, a state represented by the phrase "the member C is provided between the member A and the member B" includes a state in which the member A is indirectly coupled to the member C, or the member B is indirectly coupled to the member C via another member that does not substantially affect the electrical connection between them, or that does not damage the functions or effects of the connection between them, in addition to a state in which they are directly coupled.

In the present specification, the reference symbols denoting electric signals such as a voltage signal, current signal, or the like, and the reference symbols denoting circuit elements such as a resistor, capacitor, or the like, also represent the corresponding voltage value, current value, resistance value, or capacitance value as necessary.

EXAMPLE 1

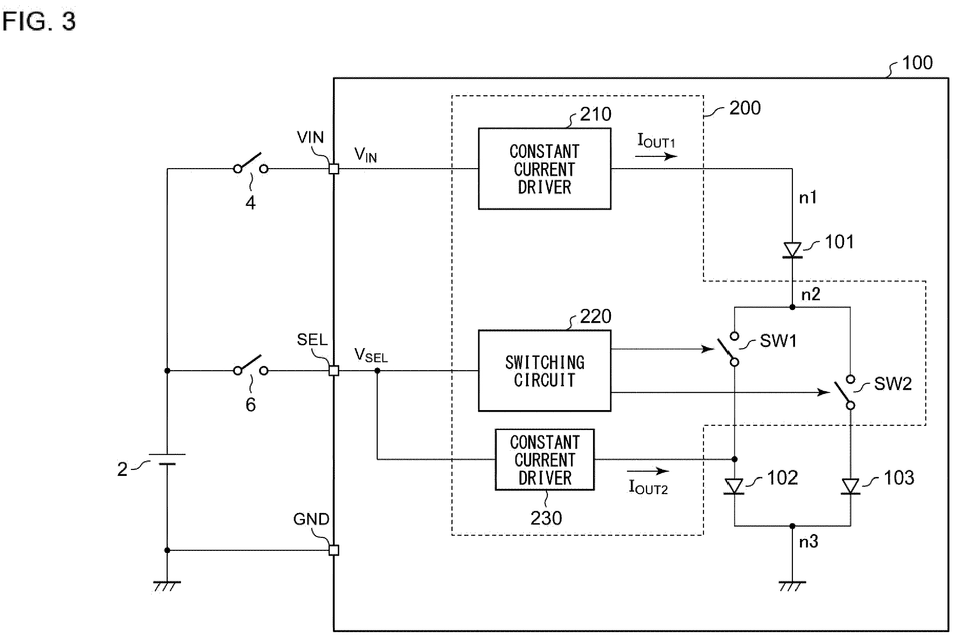

Fig. 3 is a circuit diagram of an automotive lamp 100 according to an example 1. The automotive lamp 100 is configured as a lamp having two different functions. The automotive lamp 100 includes an interface having the same configuration as that of a bi-halogen lamp.

The automotive lamp 100 includes a main input terminal VIN, a switching terminal SEL, and a ground terminal GND. The ground GND is grounded. The input terminal VIN receives the supply of a voltage $V_{BAT}$ from a battery 2 via a switch 4 arranged on the vehicle side. On the vehicle side, upon turning on a lighting switch for a headlamp by the driver, the switch 4 is turned on, which supplies a power supply voltage $V_{IN}$ to the input terminal VIN. The power supply voltage $V_{IN}$ has two functions, i.e., a function as a power supply voltage for the automotive lamp 100 and a function as a lighting instruction.

Furthermore, the electrical state of the switching terminal SEL of the automotive lamp 100 is switched between the first state and the second state according to the lighting mode of the automotive lamp 100. In the present embodiment, the first state is a no-input (high-impedance) state. The second state is a state in which a non-zero voltage is input. Specifically, the switching terminal SEL is coupled to the battery 2 via a switch 6 arranged on the vehicle side. On the vehicle side, when the driver selects the low-beam mode (first lighting mode), the switch 6 is turned off so as to set the switching terminal SEL to a no-input (high-impedance) state. When the driver selects the high-beam mode (second lighting mode), the switch 6 is turned on so as to supply a switching voltage $V_{SEL}$ having a high level (battery voltage) to the switching terminal SEL.

The automotive lamp 100 is configured as a lamp module that is switchable between the high-beam mode and the low-beam mode. The automotive lamp 100 includes a first semiconductor light source 101, a second semiconductor light source 102, a third semiconductor light source 103, and a lighting circuit 200. The first semiconductor light source 101, the second semiconductor light source 102, and the third semiconductor light source 103 are each configured as a white light-emitting diode (LED), for example.

The first semiconductor light source 101 through the third semiconductor light source 103 are coupled such that the current that flows through the first semiconductor light source 101 is the sum total of the currents that flow through the second semiconductor light source 102 and the third semiconductor light source 103. Specifically, the first semiconductor light source 101 is coupled between a first node n1 and a second node n2. The second semiconductor light source 102 is coupled between the second node n2 and a third node n3 so as to form a first path. The third semiconductor light source 103 is coupled between the second node n2 and the third node n3 so as to form a second path that is parallel to the first path.

The lighting circuit 200 drives the first semiconductor light source 101 through the third semiconductor light source 103. In the first lighting mode (low-beam mode), the lighting circuit 200 turns on the first semiconductor light source 101 and the second semiconductor light source 102, and turns off the third semiconductor light source 103. In the second lighting mode, the lighting circuit 200 turns on the first semiconductor light source 101 and the third semiconductor light source 103, and turns on the second semiconductor light source 102 so as to be dimmer than the first lighting mode. The first semiconductor light source 101 is preferably operated to provide almost no change in brightness between the first lighting mode and the second lighting mode.

The lighting circuit 200 includes a first constant current driver 210, a switching circuit 220, a second constant current driver 230, a first switch SW1, and a second switch SW2.

The first constant current driver 210 has its output node OUT coupled to the anode (first node n1) of the first semiconductor light source 101. When the power supply voltage $V_{IN}$ is supplied to the input terminal VIN, the first constant current driver 210 is activated, and outputs a first driving current $I_{OUT1}$. The first constant current driver 210 may be configured as a switching converter that outputs a constant current. Also, the first constant current driver 210 may be configured as a constant current output linear regulator or other kinds of constant current circuits.

In the present embodiment, the third node n3, i.e., the cathode of the second semiconductor light source 102 and the cathode of the third semiconductor light source 103 are grounded. The first switch SW1 is arranged between the cathode (second node n2) of the first semiconductor light source 101 and the anode of the second semiconductor light source 102. The second switch SW2 is arranged between the cathode (second node n2) of the first semiconductor light source 101 and the anode of the third semiconductor light source 103.

In the first state (high impedance, no input) of the switching terminal SEL, the switching circuit 220 turns on the first switch SW1 and turns off the second switch SW2. On the other hand, in the second state of the switching terminal SEL, i.e., when the switching voltage $V_{SEL}$ is supplied, the switching circuit 220 turns off the first switch SW1 and turns on the second switch SW2.

The second constant current driver 230 is coupled to the switching terminal SEL. When the switching voltage $V_{SEL}$ is supplied to the switching terminal SEL, the second constant current driver 230 becomes active, and supplies a second driving current $I_{OUT2}$ that is smaller than the first driving current $I_{OUT1}$ to the anode of the second semiconductor light source 102. The second driving current $I_{OUT2}$ may preferably be determined to the extent that, in the second state, a region including the second semiconductor light source 102 can be visible as being turned on when viewed from the exterior of the automotive lamp 100. For example, the second driving current $I_{OUT2}$ may preferably be determined to be larger than 10 mA.

The above is the configuration of the automotive lamp 100. Next, description will be made regarding the operation thereof.

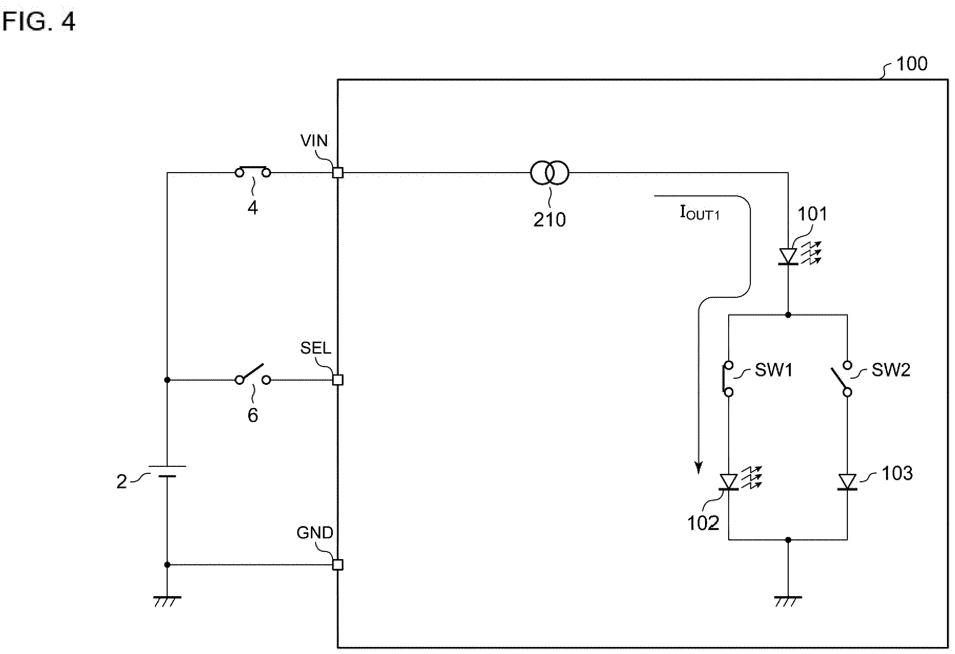

Fig. 4 is an equivalent circuit diagram of the automotive lamp 100 shown in Fig. 3 in the first lighting mode (low-beam mode). In the first lighting mode, the first driving current $I_{OUT1}$ generated by the first constant current driver 210 flows through the first semiconductor light source 101, the first switch SW1, and the second semiconductor light source 102. Accordingly, the first semiconductor light source 101 and the second semiconductor light source 102 are turned on.

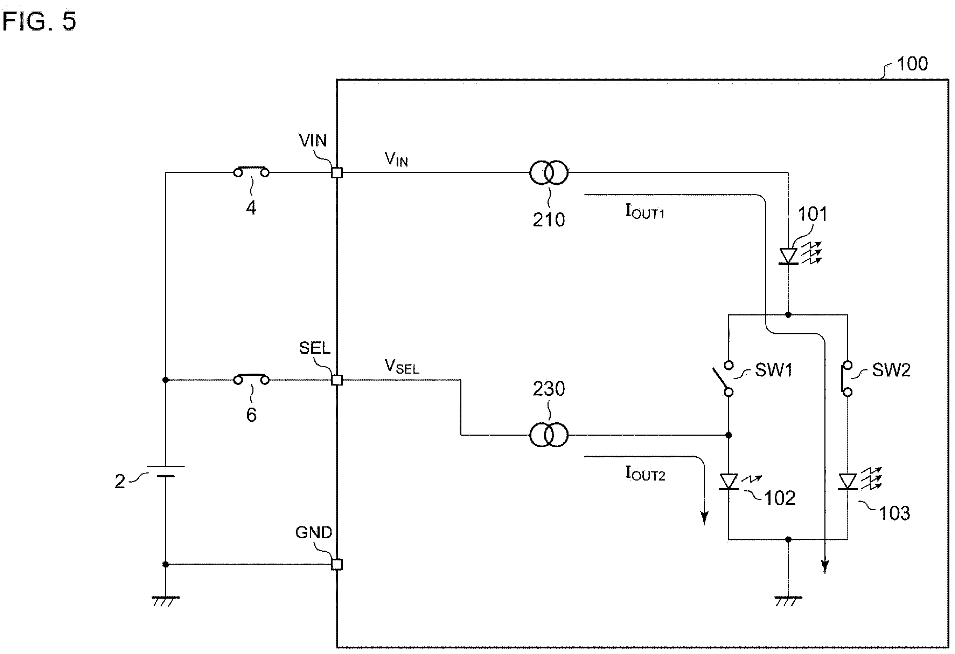

Fig. 5 is an equivalent circuit diagram of the automotive lamp 100 shown in Fig. 3 in the second lighting mode (high-beam mode). In the second lighting mode, the first driving current $I_{OUT1}$ generated by the first constant current driver 210 flows through the first semiconductor light source 101, the second switch SW2, and the third semiconductor light source 103. Accordingly, the first semiconductor light source 101 and the third semiconductor light source 103 are turned on. Furthermore, the second driving current $I_{OUT2}$ generated by the second constant current driver 230 flows through the second semiconductor light source 102. Accordingly, the second semiconductor light source 102 remains turned on. However, the light intensity thereof is reduced as compared with that in the first lighting mode.

The above is the operation of the automotive lamp 100.

With the automotive lamp 100, when the lighting mode is switched from the first lighting mode (low-beam mode) to the second lighting mode (high-beam mode), the third semiconductor light source 103 is additionally turned on in a state in which the second semiconductor light source 102 remains turned on. Accordingly, this is capable of preventing a portion that had been bright from suddenly becoming dim immediately after the mode switching as viewed from the surroundings of the automotive lamp 100, thereby providing an improved appearance.

Furthermore, with the automotive lamp 100, even in the second lighting mode, the second semiconductor light source remains turned on. Accordingly, this is capable of preventing the brightness of a region illuminated by the second semiconductor light source 102 on a virtual vertical screen from changing significantly.

For example, let us consider an arrangement in which the optical system of the automotive lamp 100 is designed such that the output light of the first semiconductor light source 101, the second semiconductor light source 102, and the third semiconductor light source 103 are respectively emitted to the regions A1, A2, and A3 shown in Fig. 2. That is to say, the first semiconductor light source 101 is designed such that its output light forms the light distribution pattern A1 having an upper edge that defines a horizontal cutoff line. The second semiconductor light source 102 is designed such that its output light forms the light distribution pattern A2 having an upper edge that defines an oblique cutoff line. The third semiconductor light source 103 is designed such that its output light forms a light distribution pattern to be used in the high-beam mode.

In this case, in a case in which the second semiconductor light source 102 is designed to be turned off in the second lighting mode, the region A2 becomes dim. In particular, in this state, the region L2 is not illuminated by any one of the light sources. In contrast, with the present embodiment, the second semiconductor light source 102 remains turned on in the second lighting mode. Accordingly, in this state, light is emitted to the region A2, thereby suppressing an unnatural change in the light distribution.

Furthermore, in the second lighting mode, the driving current $I_{OUT2}$ that flows through the second semiconductor light source 102 is smaller than the driving current $I_{OUT1}$ that flows through in the first lighting mode. Accordingly, this involves only a slight increase in the heat generation (power consumption) due to the second semiconductor light source 102 remaining turned on. Accordingly, there is no need to apply an additional heat-generation countermeasure. Alternatively, such an arrangement requires only a minor countermeasure. This is capable of suppressing an increase in cost.

Furthermore, by designing the amount of the second driving current $I_{OUT2}$ to be larger than 10 mA, this allows a contact current exceeding 10 mA required to prevent oxidation of the connector terminal to flow through the switching terminal SEL. That is to say, the driving current $I_{OUT2}$ of the second semiconductor light source 102 also has a function for preventing oxidation, thereby suppressing an increase in unnecessary power consumption.

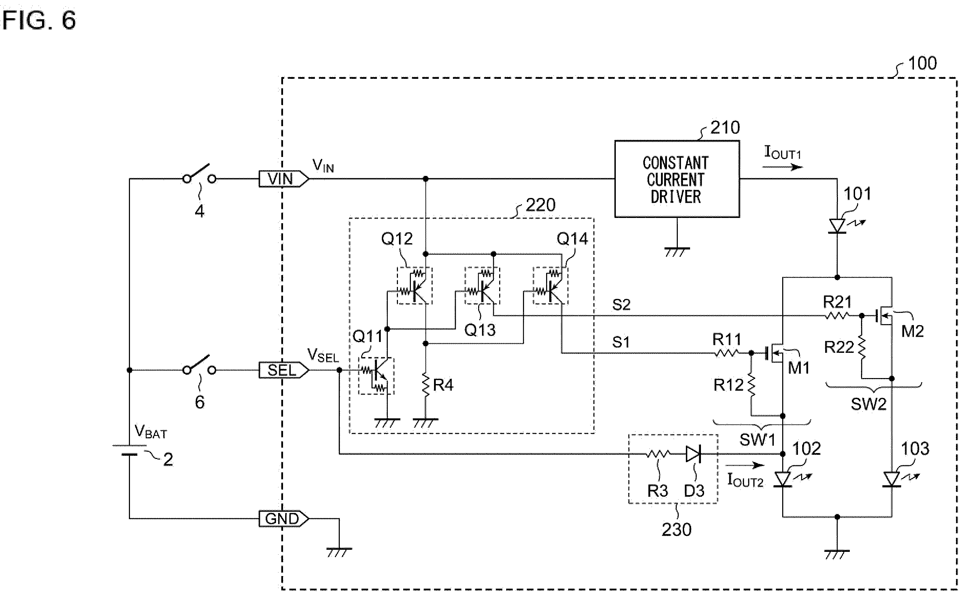

Fig. 6 is a circuit diagram showing a specific example configuration of the automotive lamp 100. The second constant current driver 230 includes a current-limiting resistor R3 and a diode D3. With the forward voltage of the diode D3 as Vf3, and with the forward voltage of the second semiconductor light source 102 as Vf2, the second driving current $I_{OUT2}$ is represented by the following Expression.

$$I_{OUT2} = (V_{SEL} - Vf2 - Vf3)/R3 = (V_{BAT} - Vf2 - Vf3)/R3$$

That is to say, the amount of the second driving current $I_{OUT2}$ can be determined according to the resistance value of the current-limiting resistor R3. Furthermore, with such an arrangement provided with the diode D3, this is capable of preventing the first driving current $I_{OUT1}$ generated by the first constant current driver 210 from flowing into the switching terminal SEL or the switching circuit 220. It should be noted that, in a case in which the switching circuit 220 has a sufficiently high input impedance, the diode D3 may be omitted.

The first switch SW1 includes a first transistor M1 configured as an N-channel MOSFET and resistors R11 and R12. Similarly, the second switch SW2 includes a second transistor M2 configured as a MOSFET and resistors R21 and R22. The first switch SW1 and the second switch SW2 are each configured such that, upon inputting the high level to the gate, the corresponding switch is turned on, and upon inputting the low level to the gate, the corresponding switch is turned off. It should be noted that the configurations of the switches SW1 and SW2 are not restricted to such arrangements.

When the switching terminal SEL is set to the first state (no input, low level, high impedance), the switching circuit 220 sets the control terminal of the first switch SW1 to the high-level state, and sets the control terminal of the second switch SW2 to the low-level state. Conversely, when the switching terminal SEL is set to the second state (high level ($V_{SEL} = V_{BAT}$)), the switching circuit 220 sets the control terminal of the first switch SW1 to the low-level state, and sets the control terminal of the second switch SW2 to the high-level state.

That is to say, the switching circuit 220 supplies a first output signal S1 having a logical value complementary to that of the signal input to the switching terminal SEL to the first switch SW1, and supplies a second output signal S2 having the same logical value as that of the signal input to the switching terminal SEL to the second switch SW2.

The switching circuit 220 includes transistors Q11 through Q14 and a resistor R4. When the switching terminal SEL is set to the low-level state or the high-impedance state, the transistors Q11 and Q12 are turned off and the transistor Q14 is turned on. Accordingly, the high-level signal S1 is input to the control terminal of the first switch SW1. In this state, the transistor Q13 is turned off. Accordingly, the control terminal of the second switch SW2 is set to the low level.

Conversely, when the switching terminal SEL is set to the high-level state, the transistors Q11 and Q12 are turned on, and the transistor Q14 is turned off. Accordingly, the control terminal of the first switch SW1 is set to the low-level state. In this state, the transistor Q13 is turned on. Accordingly, the control terminal of the second switch SW2 is set to the high-level state.

It can be understood by those skilled in this art that the configurations of the first switch SW1, the second switch SW2, the switching circuit 220, and the second constant current driver 230 are not restricted to those shown in Fig. 6.

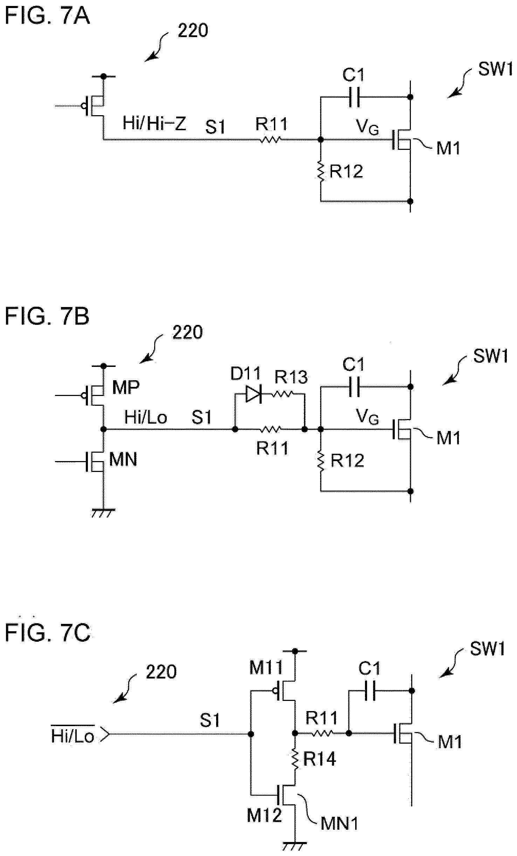

Figs. 7A through 7C are diagrams each showing a modification of the first switch SW1. Figs. 7A through 7C each show an output stage of the switching circuit 220. The same can be said of the second switch SW2.

In Fig. 7A, the switching circuit 220 includes an open-drain/open-collector output stage in the same manner as that shown in Fig. 6. The control signal S1 is designed to be switchable between two states, i.e., the high-level state (Hi) and the high-impedance state (Hi-Z). When the control signal S1 is set to the high-impedance state, the output node of the switching circuit 220 is pulled down to the low-level state by the resistors R11 and R12, which turns off the transistor M1.

In this modification, the first switch SW1 further includes a capacitor C1. One end of the capacitor C1 is coupled to the drain (or collector) of the transistor M1. The other end of the capacitor C1 is coupled to the control terminal (i.e., gate or base) of the switching transistor M1.

Description will be made regarding the turn-on operation of the switch SW1. When the gate voltage $V_G$ increases to the vicinity of the gate-source threshold voltage $V_{GS(th)}$ of the transistor M1, the rate of increase of the gate voltage $V_G$ becomes very slow due to the Miller effect caused by the capacitor C1. This allows the switch SW1 to be gradually turned on.

The same can be said of the turn-off operation. When the gate voltage $V_G$ decreases to the vicinity of the gate-source threshold voltage $V_{GS(th)}$ of the transistor M1, the rate of decrease of the gate voltage $V_G$ becomes very slow due to the Miller effect caused by the capacitor C1. This allows the switch SW1 to be gradually turned off.

With such an arrangement in which the capacitor C1 is additionally provided to the first switch SW1 (and the second switch SW2), this is capable of gradually turning on and off the switch. This allows the light intensities of the second semiconductor light source 102 and the third semiconductor light source 103 to be gradually changed. That is to say, this supports gradual turn-on and gradual turn-off. Furthermore, this is capable of preventing a sudden change in the electric potential at the anode or the cathode of each of the first semiconductor light source 101 through the third semiconductor light source 103.

Furthermore, in Fig. 7A, by designing the resistor R11 to have a resistance value that is lower than that of the resistor R12, this allows the turn-on time of the transistor to be designed to be relatively shorter than the turn-off time. This allows the on time of the first switch SW1 and the on time of the second switch SW2 to overlap. In a case in which there is an off period in which both the first switch SW1 and the second switch SW2 are turned off, the first semiconductor light source 101, the second semiconductor light source 102, and the third semiconductor light source 103 are all turned off, leading to the occurrence of a dark field of view for the driver. In contrast, with such an arrangement shown in Fig. 7A in which R11 < R12, this ensures that at least one of the first switch SW1 and the second switch SW2 turns on. This prevents the occurrence of a dark field of view for the driver.

If there is an off section in which both the first switch SW1 and the second switch SW2 are turned off, the first constant current driver 210 enters a no-load state. This leads to an increase in the output voltage $V_{OUT}$, resulting in an overvoltage state. When the first switch SW1 or the second switch SW2 is turned on in a state in which the output voltage $V_{OUT}$ increases, overcurrent flows through the LED. In contrast, with such an arrangement shown in Fig. 7A in which R11 < R12, this ensures that at least one of the first switch SW1 and the second switch SW2 is on. This suppresses the overvoltage state and overcurrent.

Fig. 7B shows an arrangement in which the switching circuit 220 includes a push-pull output stage including a high-side transistor MP and a low-side transistor MN. The control signal S1 is designed to be switchable between two states, i.e., high level (Hi) and low level (Lo). In this modification, the first switch SW1 further includes a resistor R13 and a diode D11.

When the high-side transistor MP of the output stage of the switching circuit 220 is turned on, the gate of the transistor M1 is charged via a parallel connection circuit formed of the resistors R11 and R13, thereby raising the gate voltage $V_G$. When the low-side transistor MN of the output stage of the switching circuit 220 is turned on, the gate of the transistor M1 is discharged via the resistor R11, thereby reducing the gate voltage $V_G$.

With this, there is a difference in impedance between the charging path and the discharging path. Accordingly, the gate voltage $V_G$ increases at a rate that is higher than a rate at which the gate voltage $V_G$ decreases. This allows the first switch SW1 to be turned on in a short period of time and to be turned off slowly. That is to say, this allows the light intensity of the second semiconductor light source 102 to be gradually reduced (gradual turn-off). The same can be said of the third semiconductor light source 103.

With the configuration shown in Fig. 7B, this allows the on time of the first switch SW1 and the on time of the second switch SW2 to overlap in the same manner as shown in Fig. 7A. This ensures that at least one of the first switch SW1 and the second switch SW2 is turned on. This prevents the occurrence of a dark field of view for the driver. Furthermore, this suppresses the overvoltage state and overcurrent.

The first switch SW1 shown in Fig. 7C further includes an inverter including transistors M11 and M12 and a resistor R14. That is to say, the first switch SW1 includes a negative control logic circuit configured such that, when the input signal S1 is set to the high level, the first switch SW1 is turned off, and when the input signal is set to the low level, the first switch SW1 is turned on. Accordingly, the output S1 of the switching circuit 220 has logical values that are opposite to those described above.

When the high-side transistor MP of the output stage of the switching circuit 220 is turned on, the gate of the transistor M1 is charged via a parallel connection circuit formed of the resistors R11 and R13, thereby raising the gate voltage $V_G$. When the low-side transistor MN of the output stage of the switching circuit 220 is turned on, the gate of the transistor M1 is discharged via the resistor R11, thereby lowering the gate voltage $V_G$.

When the control signal S1 is set to the low level, the transistor M11 is turned on, and accordingly, the gate of the transistor M1 is charged via the resistor R11. In this state, the gate voltage $V_G$ increases, thereby turning on the transistor M1. Conversely, when the control signal S1 is set to the high level, the transistor M12 is turned on, and accordingly, the gate of the transistor M1 is discharged via the resistors R11 and R14. In this state, the gate voltage $V_G$ decreases, thereby turning off the transistor M1.

With this, there is a difference in impedance between the charging path and the discharging path. Accordingly, the gate voltage $V_G$ increases at a rate that is higher than a rate at which the gate voltage $V_G$ decreases. As with the arrangements shown in Figs. 7A and 7B, this allows the first switch SW1 to be turned on in a short period of time, and to be turned off slowly. That is to say, this allows the light intensity of the second semiconductor light source 102 to be gradually reduced (gradual turn-off). The same can be said of the third semiconductor light source 103.

With the configuration shown in Fig. 7C, this allows the on time of the first switch SW1 and the on time of the second switch SW2 to overlap in the same manner as those shown in Figs. 7A and 7B. This prevents the occurrence of a dark field of view due to the first semiconductor light source 101 through the third semiconductor light source 103 tuning off at the same time.

Furthermore, with the configuration shown in Fig. 7C, this ensures that at least one of the first switch SW1 and the second switch SW2 are turned on. Accordingly, this suppresses the overvoltage state and overcurrent.

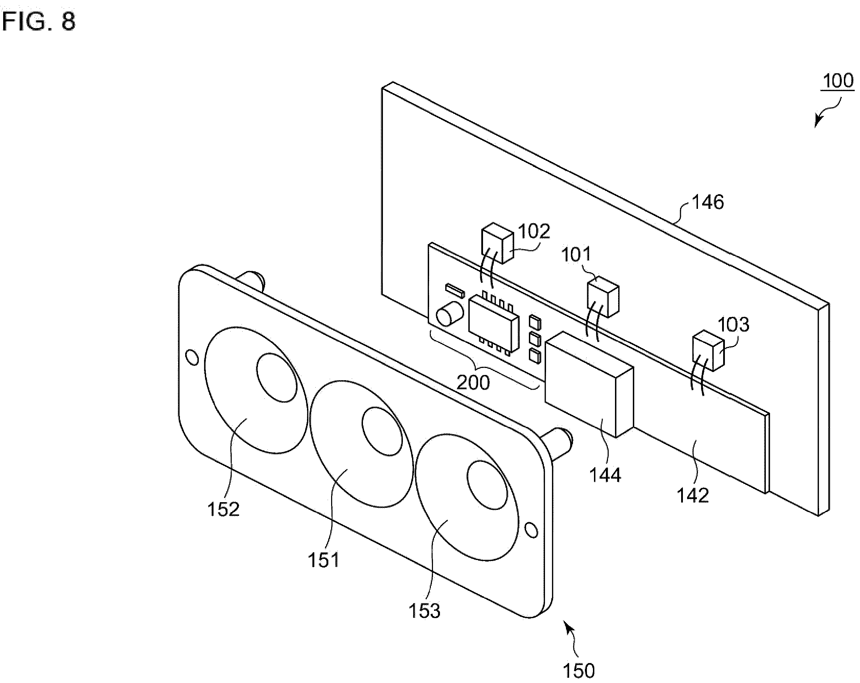

Fig. 8 is a perspective diagram of a light source module, which is an example of the automotive lamp 100. The first semiconductor light source 101, the second semiconductor light source 102, and the third semiconductor light source 103 are arranged side-by-side in one direction on a radiator plate 146. The order of the first semiconductor light source 101, the second semiconductor light source 102, and the third semiconductor light source 103 is not restricted in particular. Also, the three semiconductor light sources, i.e., the first semiconductor light source 101 through the third semiconductor light source 103 may be arranged such that they define the vertices of a triangle.

Components of the lighting circuit 200 and a connector 144 are mounted on a printed circuit board 142. The connector 144 includes three terminals, i.e., an input terminal VIN, a switching terminal SEL, and a ground terminal GND. The wiring of the printed circuit board 142 is coupled to the electrodes of the first semiconductor light source 101 through the third semiconductor light source 103 via bonding wires. It should be noted that the printed circuit board 142 may be omitted. In this case, the components of the lighting circuit 200 and the connector 144 may be directly mounted on the radiator plate 146. Furthermore, in the present embodiment, the heat generation of the automotive lamp 100 is reduced. Accordingly, the radiator plate 146 having a thin thickness may be employed. However, instead of such a thin radiator plate 146, a heat sink having a large thickness may be employed. The connector 144 is not restricted to such a connector to be mounted. Also, other types of connectors such as a card edge connector or the like may be employed.

A lens module 150 includes a first lens 151, a second lens 152, and a third lens 153. The first lens 151 receives the output beam of the first semiconductor light source 101, and projects the output beam to a low-beam diffusion region A1. The second lens 152 receives the output beam of the second semiconductor light source 102, and projects it to a low-beam focusing region A2. The third lens 153 receives the output beam of the third semiconductor light source 103, and projects it to a high-beam region A3.

Next, description will be made regarding modifications relating to the embodiment 1.

MODIFICATION 1.1

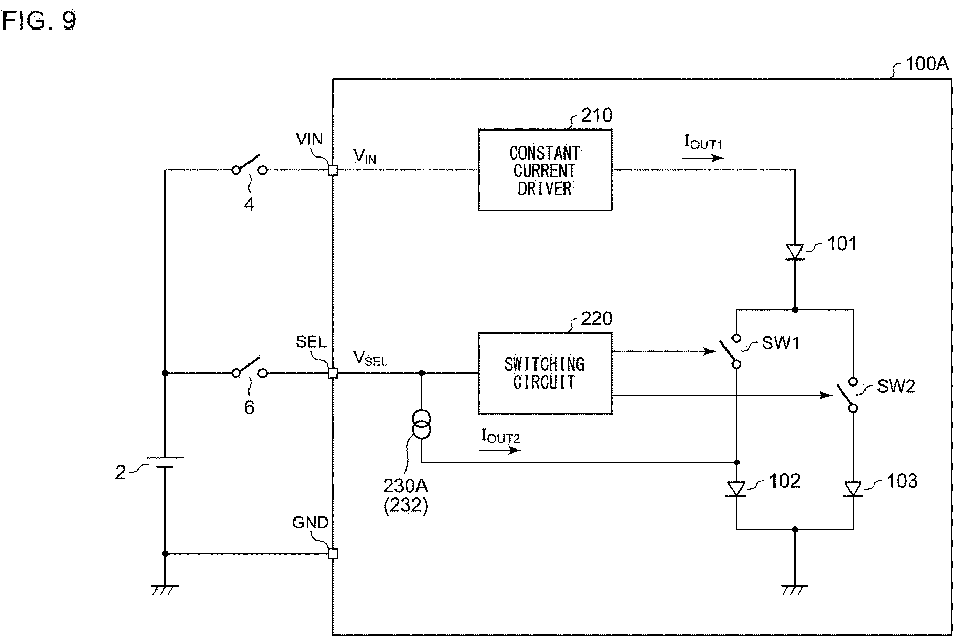

Fig. 9 is a block diagram of an automotive lamp 100A according to a modification 1.1. In this modification, a second constant current driver 230A is configured as a constant current source 232 that receives the supply of power from the switching terminal SEL. When the switching signal $V_{SEL}$ is set to the high level in the second lighting mode, the constant current source 232 is turned on. In this state, the second driving current $I_{OUT2}$ is supplied to the second semiconductor light source 102.

With this modification, the same effects can be obtained as those of the automotive lamp 100 shown in Fig. 6.

MODIFICATION 1.2

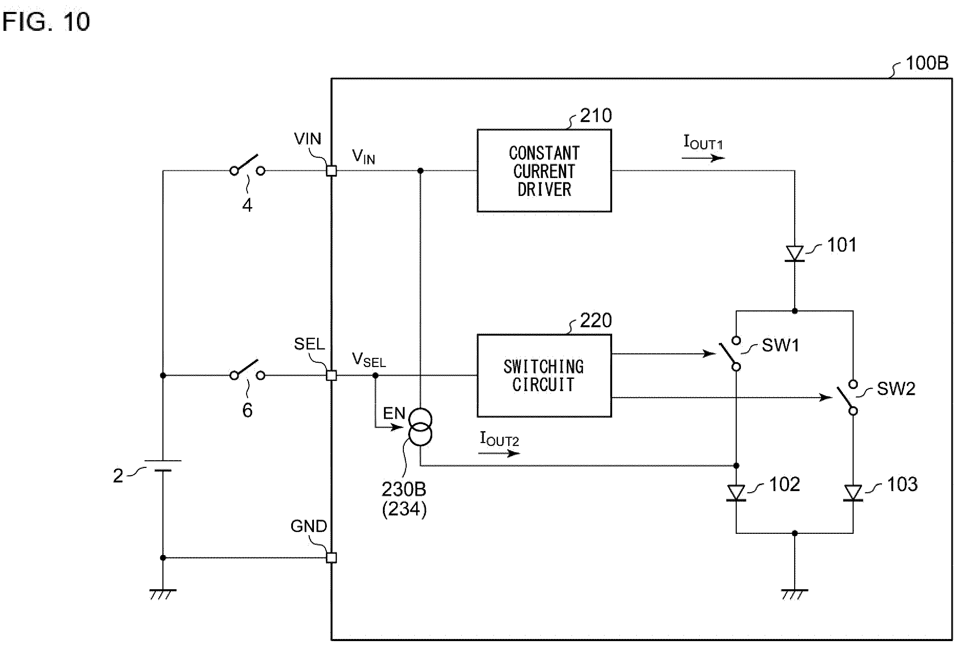

Fig. 10 is a block diagram of an automotive lamp 100B according to a modification 1.2. In this modification, a second constant current driver 230B is configured as a constant current source 234 with an enable terminal configured to receive a supply of power from the input terminal VIN. The switching signal $V_{SEL}$ is input to the enable terminal EN of the constant current source 234. When the switching signal $V_{SEL}$ is set to the high level in the second lighting mode, the constant current source 232 is turned on. In this state, the second driving current $I_{OUT2}$ is supplied to the second semiconductor light source 102.

With the automotive lamp 100B, in the second lighting mode, this is capable of preventing the illumination region of the semiconductor light source 102 from becoming significantly dimmer in the second lighting mode.

It should be noted that, in the automotive lamp 100B, the switching terminal SEL has a high impedance. Accordingly, during the second lighting mode, almost no contact current flows. Accordingly, in order to prevent oxidation of the connector terminal, there is a need to additionally provide an arrangement configured to flow contact current. In other words, with an arrangement configured to supply the power supply voltage of the second constant current driver 230 from the switching terminal SEL, i.e., with an arrangement in which the second driving current $I_{OUT2}$ is supplied from the switching terminal SEL, the operating current of the second constant current driver 230 continuously flows during the second lighting mode. Such arrangement requires no additional configuration for preventing oxidation of the connector terminal.

MODIFICATION 1.3

The positions of the second switch SW2 and the third semiconductor light source 103 may be interchanged.

MODIFICATION 1.4

Each bipolar transistor may be replaced by a Metal Oxide Semiconductor Field Effect Transistor (MOSFET). In this case, the base, collector, and emitter correspond to the gate, drain, and source, respectively. Also, each NPN (N-channel) transistor may be replaced by a PNP (P-channel) transistor.

MODIFICATION 1.5

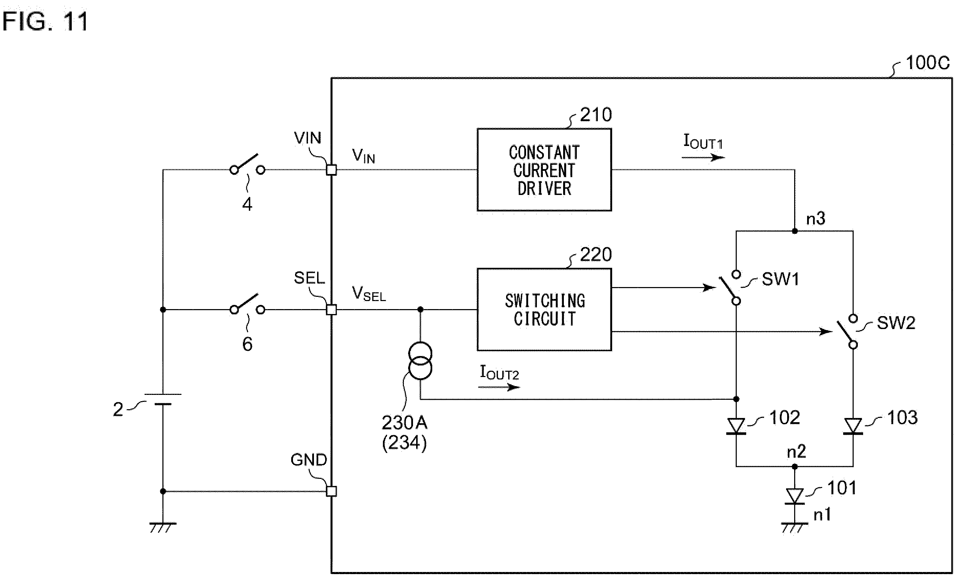

Fig. 11 is a block diagram of an automotive lamp 100C according to a modification 1.5. In this modification, the layout of the first semiconductor light source 101 through the third semiconductor light source 103 has a relation such that they are arranged by top/bottom inversion of the layout of those described above. That is to say, Figs. 3, 9, and 10 each show an arrangement in which the first node n1 is arranged on the high-voltage side, and the third node n3 is arranged on the ground side. In contrast, Fig. 11 shows an arrangement in which the first node n1 is arranged on the ground side, and the third node n3 is arranged on the high-voltage side. The arrangement shown in Fig. 11 has the same configuration as the automotive lamp 100A shown in Fig. 9 except for the layout described above.

With this modification, in the second lighting mode, the current $I_{OUT2}$ generated by the second constant current driver 230A flows through the first semiconductor light source 101 in addition to the second semiconductor light source 102. This is the point of difference from the arrangement shown in Fig. 9.

MODIFICATION 1.6

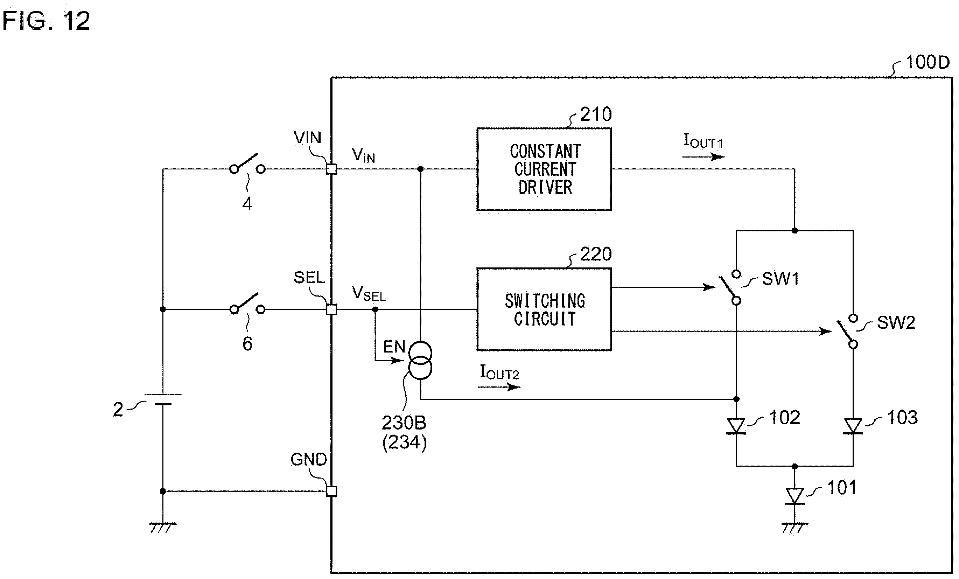

Fig. 12 is a block diagram of an automotive lamp 100D according to a modification 1.6. In this modification, the first node n1 is arranged on the ground side, and the third node n3 is arranged on the high-voltage side. Fig. 12 shows the same configuration as that of the automotive lamp 100B shown in Fig. 10 except for the layout described above.

With this modification, in the second lighting mode, the current $I_{OUT2}$ generated by the second constant current driver 230A flows through the first semiconductor light source 101 in addition to the second semiconductor light source 102. This is the point of difference from the arrangement shown in Fig. 10.

MODIFICATION 1.7

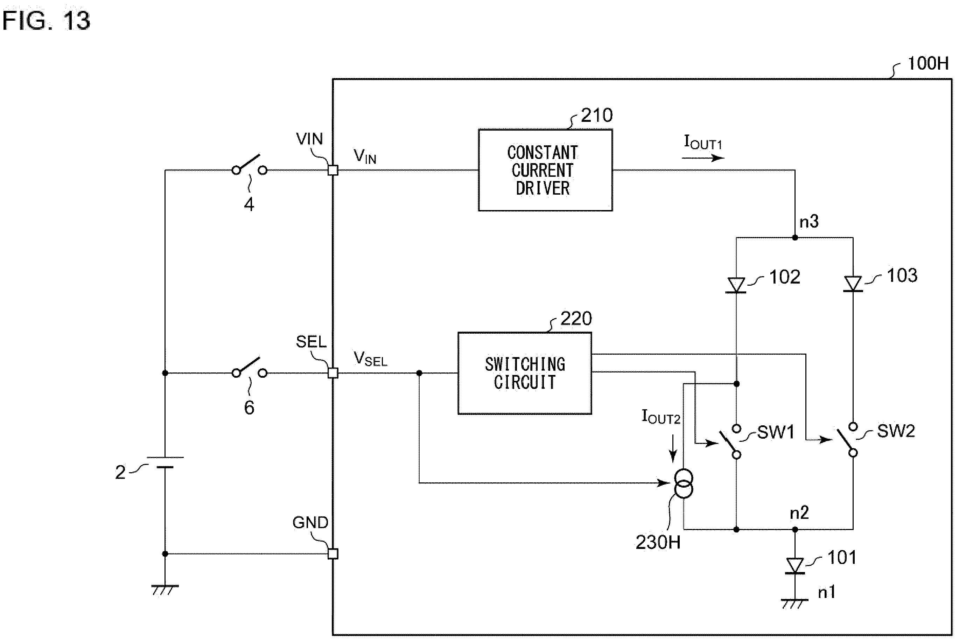

Fig. 13 is a block diagram of an automotive lamp 100H according to a modification 1.7. In this modification, the first node n1 is arranged on the ground side, and the third node n3 is arranged on the high-voltage side.

A second constant current driver 230H is coupled in parallel with the first switch SW1. In the first lighting mode, the switching circuit 220 turns on the first switch SW1 and turns off the second switch SW2. In the second lighting mode, the switching circuit 220 turns off the first switch SW1 and turns on the second switch SW2.

When the switching terminal SEL is set to the first state, the second constant current driver 230H is disabled. On the other hand, when the switching terminal SEL is set to the second state, the second constant current driver 230H is enabled. In this state, the second constant current driver 230H generates the second driving current $I_{OUT2}$.

EMBODIMENT 2

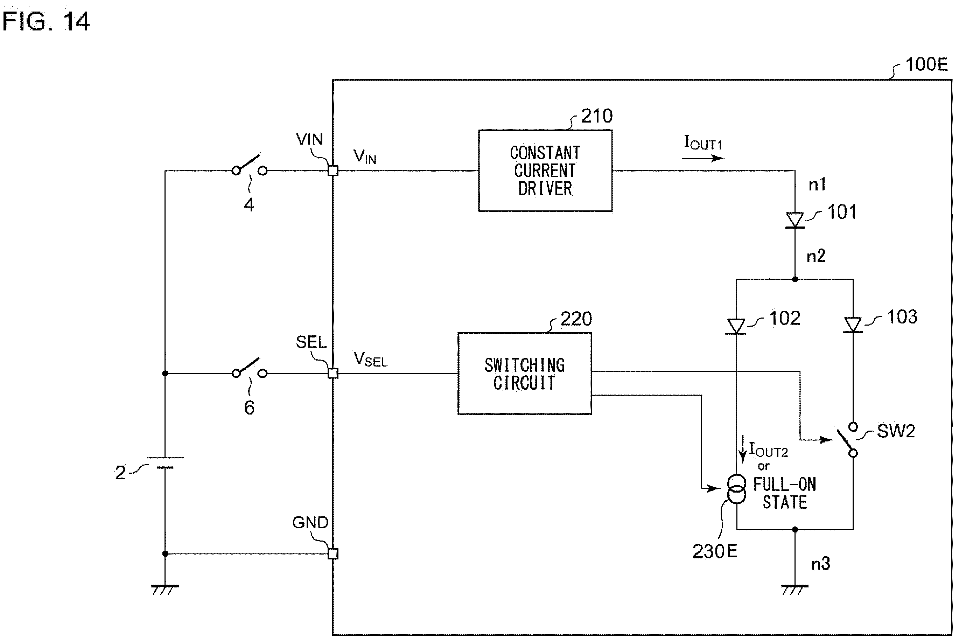

Fig. 14 is a block diagram of an automotive lamp 100E according to an embodiment 2. A lighting circuit 200E includes the first constant current driver 210, the switching circuit 220, a second constant current driver 230E, and the second switch SW2.

The second constant current driver 230E is coupled between the third node n3 and the second semiconductor light source 102 on the first path. The second constant current driver 230E is configured to be switchable between a full-on state and a constant current state in which the second driving current $I_{OUT2}$ that is smaller than the first driving current $I_{OUT1}$ is generated. The full-on state is a state in which the impedance is set to a very small value, which corresponds to the on state of the first switch SW1.

When the switching terminal SEL is set to the first state, the switching circuit 220 sets the second constant current driver 230E to the full-on state, and turns off the second switch SW2. When the switching terminal SEL is set to the second state, the switching circuit 220 sets the second constant current driver 230E to the constant current state, and turns on the second switch SW2.

With the embodiment 2, as with the embodiment 1, in the first lighting mode, this allows the first semiconductor light source 101 and the second semiconductor light source 102 to emit light brightly using the first driving current $I_{OUT1}$. Furthermore, in the second lighting mode, this allows the first semiconductor light source 101 and the third semiconductor light source 103 to emit light brightly using the first driving current $I_{OUT1}$, and allows the second semiconductor light source 102 to emit light using the second driving current $I_{OUT2}$ more dimly than in the first lighting mode.

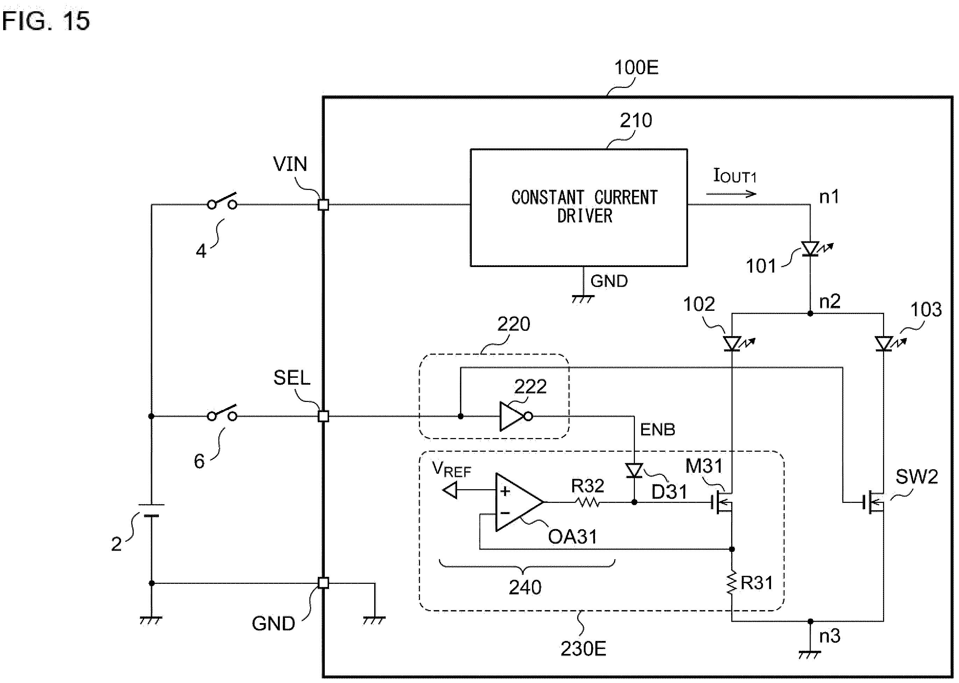

Fig. 15 is a circuit diagram showing a specific example configuration of the automotive lamp 100E shown in Fig. 14. The second constant current driver 230E includes a first transistor M31, a first resistor R31, a feedback circuit 240, and a diode D31. The first transistor M31 and the first resistor R31 are coupled in series between the second semiconductor light source 102 and the third node n3. The feedback circuit 240 controls the voltage at the control terminal (gate) of the first transistor M31 such that the voltage drop $V_{R31}$ across the first resistor R31 approaches a target voltage $V_{REF}$. The feedback circuit 240 includes an operational amplifier OA31 and a resistor R32. The cathode of the diode D31 is coupled to the gate of the first transistor M31. An inverted enable signal ENB is input to the anode of the diode D31.

The switching circuit 220 controls the second switch SW2 and the current driver 230E according to the state of the switching terminal SEL. In this example, when the switching terminal SEL is set to the first state (high impedance, low), the switching circuit 220 outputs the high-level inverted enable signal ENB, and outputs a low-level signal to the gate of the second switch SW2. When the switching terminal SEL is set to the second state (high), the switching circuit 220 outputs the low-level inverted enable signal ENB, and outputs a high-level signal to the gate of the second switch SW2. The switching circuit 220 includes an inverter 222.

When the switching terminal SEL is set to the first state, the high-level inverted enable signal EN is input to the second constant current driver 230E. When the inverted enable signal EN is set to the high level, the gate of the first transistor M31 is fixed to the high level, which disables the feedback circuit 240. In this state, the first transistor M31, i.e., the second constant current driver 230E is set to the full-on state. Furthermore, the second switch SW2 is turned off. Accordingly, the lighting mode is set to the first lighting mode.

When the switching terminal SEL is set to the second state, the low-level inverted enable signal EN is input to the second constant current driver 230E. In this state, the feedback circuit 240 is activated, so as to set the second constant current driver 230E to a constant current state. In the constant current state, the second driving current $I_{OUT2}$ is stabilized to $I_{OUT2} = V_{REF}/R31$. In this case, the second switch SW2 is turned on. Accordingly, the lighting mode is set to the second lighting mode.

Description will be made regarding modifications relating to the embodiment 2.

MODIFICATION 2.1

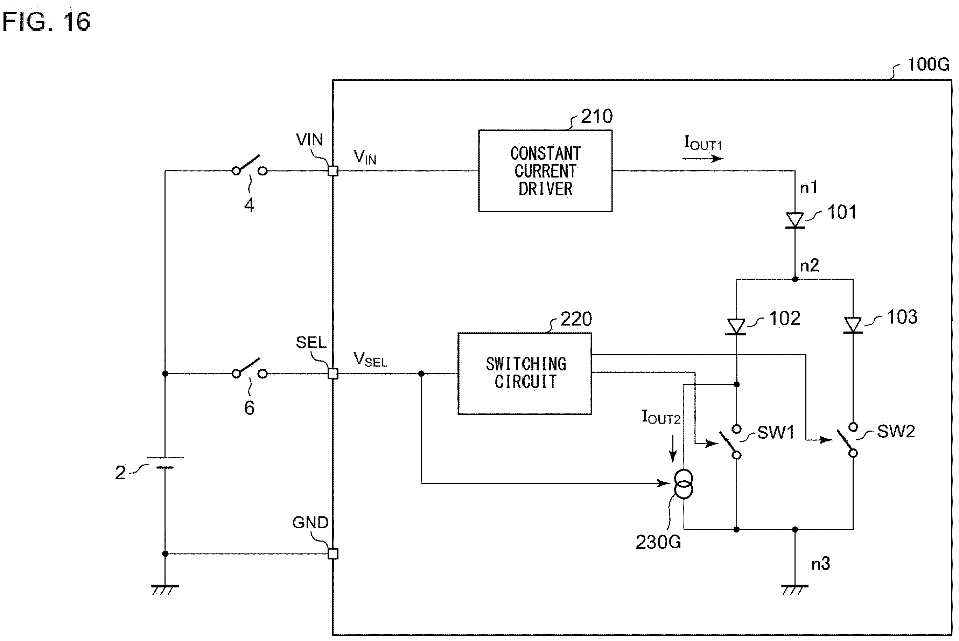

Fig. 16 is a circuit diagram of an automotive lamp 100G according to a modification 2.1. The automotive lamp 100G can be regarded as the same configuration as that shown in Fig. 14 except that the second constant current driver 230E shown in Fig. 14 is divided into a second constant current driver 230G and a first switch SW1.

MODIFICATION 2.2

In the second lighting mode, the first constant current driver 210 may increase the first driving current $I_{OUT1}$ as compared with that in the first lighting mode.

MODIFICATION 2.3

As described in the modifications 1.5 (Fig. 9) and 1.6 (Fig. 10), in the embodiment 2, the layout of the first semiconductor light source 101 through the third semiconductor light source 103 may be arranged by top/bottom inversion of the layout of those described above.

EMBODIMENT 3

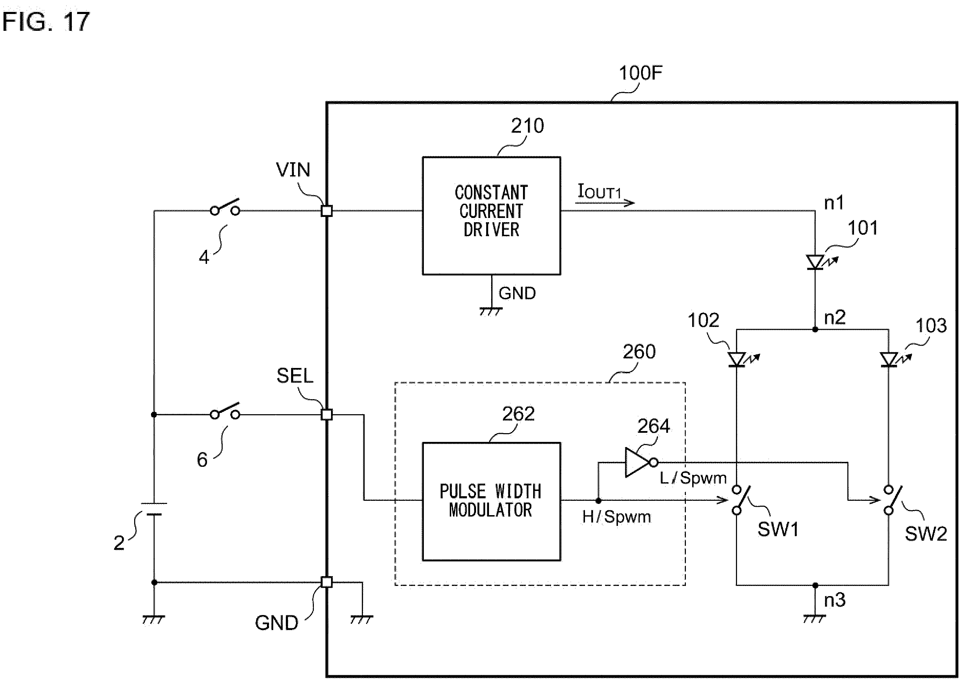

Fig. 17 is a block diagram of an automotive lamp 100F according to an embodiment 3. When the switching terminal SEL is set to the first state (low level, high impedance), a switch control circuit 260 turns on the first switch SW1 and turns off the second switch SW2. Furthermore, when the switching terminal SEL is set to the second state (high level), the switch control circuit 260 switches on and off the first switch SW1 according to a pulse signal Spwm having a first duty cycle d1 that is lower than 50%, and switches on and off the second switch SW2 according to a signal SpwmB complementary to the pulse signal Spwm.

The switch control circuit 260 includes a pulse width modulator 262 and an inverter 264. When the switching terminal SEL is set to the first state (low level, high impedance), the pulse width modulator 262 outputs a high-level signal. When the switching terminal SEL is set to the second state (high level), the pulse width modulator 262 outputs the pulse signal Spwm. The output of the pulse width modulator 262 is supplied to the first switch SW1. Furthermore, the output of the pulse width modulator 262 is inverted by the inverter 264, and the inverted signal is supplied to the second switch SW2.

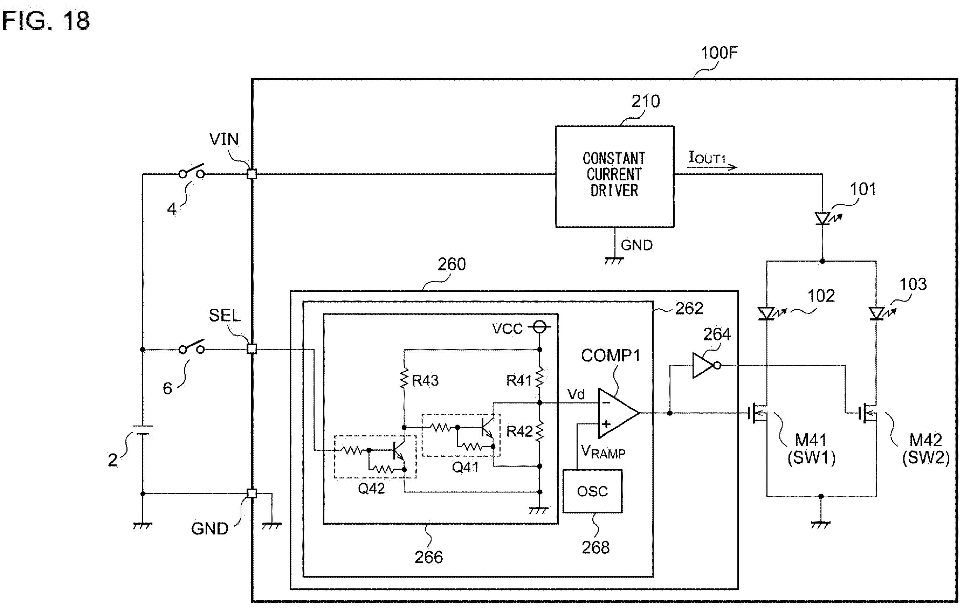

Fig. 18 is a circuit diagram showing a specific example configuration of the automotive lamp 100F shown in Fig. 17. The first switch SW1 and the second switch SW2 are configured as N-channel transistors M41 and M42.

**EP 4 329 432 A1**

The pulse width modulator 262 includes a voltage generator 266, a comparator COMP1, and an oscillator 268. In the first state, the voltage generator 266 generates the voltage Vd of 0 V. In the second state, the voltage generator 266 generates the voltage Vd having a predetermined level. The oscillator 268 generates a cyclic signal $V_{RAMP}$ configured as a ramp wave or a triangle wave. The comparator COMP1 compares the voltage Vd with the cyclic signal $V_{RAMP}$.

In the first state, the output of the comparator COMP1 is fixed to the high level. In the second state, as the output of the comparator COMP1, the pulse signal Spwm is output with a duty cycle d1 that corresponds to the voltage Vd.

The voltage generator 266 includes resistors R41 through R43 and transistors Q41 and Q42. When the switching terminal SEL is set to the first state (low level, high impedance), the transistor Q42 is turned off and the transistor Q41 is turned on. In this state, the voltage Vd is set to 0 V. When the switching terminal SEL is set to the second state (high level), the transistor Q42 is turned on and the transistor Q41 is turned off. With this, the voltage Vd is set to a voltage obtained by dividing the power supply voltage Vcc by the resistors R41 and R42.

Description will be made regarding the operation of the automotive lamp 100F shown in Figs. 17 and 18. When the switching terminal SEL is set to the first state (low level), the first switch SW1 is turned on and the second switch SW2 is turned off. Accordingly, the first driving current $I_{OUT1}$ generated by the first constant current driver 210 flows through the first semiconductor light source 101 and the second semiconductor light source 102. That is to say, the lighting mode is set to the first lighting mode.

When the switching terminal SEL is set to the first state (low level), the switch control circuit 260 generates the pulse signal Spwm having a duty cycle d1 that is smaller than 50%, so as to drive the transistor M41. Furthermore, the transistor M42 is driven by the inverted signal of the pulse signal Spwm. The first driving current $I_{OUT1}$ generated by the first constant current driver 210 flows through the second semiconductor light source 102 during a period of Tp × d1, and flows through the third semiconductor light source 103 during a period of Tp × (1 - d1) after the first driving current $I_{OUT1}$ flows through the first semiconductor light source 101. Here, Tp represents the period of the pulse signal Spwm. In this arrangement, d1 is designed such that d1 < 50% holds true. Accordingly, the semiconductor light source 102 emits light relatively dimly. In contrast, the semiconductor light source 103 emits light relatively brightly. With this, the second lighting mode is supported.

Description will be made regarding modifications relating to the embodiment 3.

MODIFICATION 3.1

In the second lighting mode, the first constant current driver 210 may increase the first driving current $I_{OUT1}$ as compared with that in the first lighting mode.

MODIFICATION 3.2

As described in the modifications 1.5 (Fig. 9) and 1.6 (Fig. 10), in the embodiment 3, the layout of the first semiconductor light source 101 through the third semiconductor light source 103 may be arranged by top/bottom inversion of the layout of those described above.

EXAMPLE 4

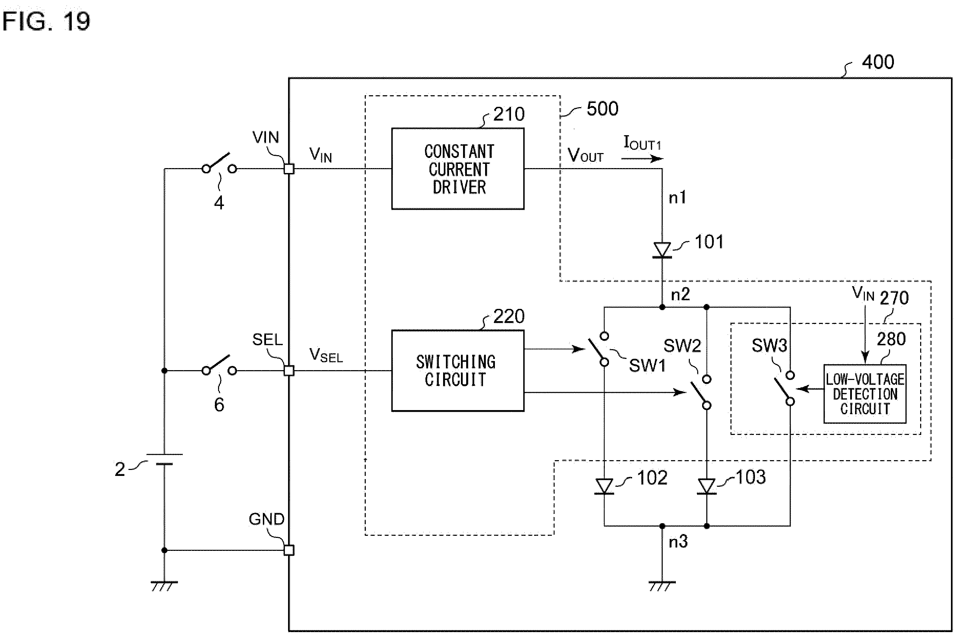

Fig. 19 is a circuit diagram of an automotive lamp 400 according to an example 4. The automotive lamp 400 is configured as a lamp having two different functions. The automotive lamp 400 includes an interface having the same configuration as that of a bi-halogen lamp.

The automotive lamp 400 includes a main input terminal VIN, a switching terminal SEL, and a ground terminal GND. The ground GND is grounded. The input terminal VIN receives the supply of a voltage $V_{BAT}$ from a battery 2 via a switch 4 arranged on the vehicle side. On the vehicle side, upon turning on a lighting switch for a headlamp by the driver, the switch 4 is turned on, which supplies a power supply voltage $V_{IN}$ to the input terminal VIN. The power supply voltage $V_{IN}$ has two functions, i.e., a function as a power supply voltage for the automotive lamp 400 and a function as a lighting instruction.

Furthermore, the electrical state of the switching terminal SEL of the automotive lamp 400 is switched between the first state and the second state according to the lighting mode of the automotive lamp 400. In the present embodiment, the first state is a no-input (high-impedance) state. The second state is a state in which a non-zero voltage is input. Specifically, the switching terminal SEL is coupled to the battery 2 via a switch 6 arranged on the vehicle side. On the vehicle side, when the driver selects the low-beam mode (first lighting mode), the switch 6 is turned off so as to set the switching terminal SEL to a no-input (high-impedance) state. When the driver selects the high-beam mode (second lighting mode), the switch 6 is turned on so as to supply a switching voltage $V_{SEL}$ having a high level (battery voltage) to the switching terminal SEL.

The automotive lamp 400 is configured as a lamp module that is switchable between the high-beam mode and

15

the low-beam mode. The automotive lamp 400 includes a first semiconductor light source 101, a second semiconductor light source 102, a third semiconductor light source 103, and a lighting circuit 500. The first semiconductor light source 101, the second semiconductor light source 102, and the third semiconductor light source 103 are each configured as a white light-emitting diode (LED), for example.

The first semiconductor light source 101 through the third semiconductor light source 103 are coupled such that the current that flows through the first semiconductor light source 101 is the sum total of the currents that flow through the second semiconductor light source 102 and the third semiconductor light source 103. Specifically, the first semiconductor light source 101 is coupled between a first node n1 and a second node n2. The second semiconductor light source 102 is coupled between the second node n2 and a third node n3 so as to form a first path. The third semiconductor light source 103 is coupled between the second node n2 and the third node n3 so as to form a second path that is parallel to the first path.

The lighting circuit 500 drives the first semiconductor light source 101 through the third semiconductor light source 103. In the first lighting mode (low-beam mode), the lighting circuit 500 turns on the first semiconductor light source 101 and the second semiconductor light source 102, and turns off the third semiconductor light source 103. In the second lighting mode, the lighting circuit 500 turns on the first semiconductor light source 101 and the third semiconductor light source 103, and turns on the second semiconductor light source 102 so as to be dimmer than the first lighting mode. The first semiconductor light source 101 is preferably operated to provide almost no change in brightness between the first lighting mode and the second lighting mode.

The lighting circuit 500 includes a first constant current driver 210, a switching circuit 220, a first switch SW1, a second switch SW2, and a bypass circuit 270.

The first constant current driver 210 has its output node OUT coupled to the anode (first node n1) of the first semiconductor light source 101. When the power supply voltage $V_{IN}$ is supplied to the input terminal VIN, the first constant current driver 210 is activated, and outputs a first driving current $I_{OUT1}$. The first constant current driver 210 may be configured as a buck converter that outputs a constant current. Also, the first constant current driver 210 may be configured as a constant current output linear regulator or other kinds of constant current circuits.

In the present embodiment, the third node n3, i.e., the cathode of the second semiconductor light source 102 and the cathode of the third semiconductor light source 103 are grounded. The first switch SW1 is arranged between the cathode (second node n2) of the first semiconductor light source 101 and the anode of the second semiconductor light source 102. The second switch SW2 is arranged between the cathode (second node n2) of the first semiconductor light source 101 and the anode of the third semiconductor light source 103.

In the first state (high impedance, no input) of the switching terminal SEL, the switching circuit 220 turns on the first switch SW1 and turns off the second switch SW2. On the other hand, in the second state of the switching terminal SEL, i.e., when the switching voltage $V_{SEL}$ is supplied, the switching circuit 220 turns off the first switch SW1 and turns on the second switch SW2.

In the first lighting mode or the second lighting mode, in order to turn on two semiconductor light sources arranged in series between the first node n1 and the third node n3, it is necessary to apply a voltage that is higher than (Vf × 2) between the first node n1 and the third node n3. That is to say, the first constant current driver 210 is required to output an output voltage $V_{OUT}$ that is higher than $V_{OUT(TH)} = 2 \times Vf$. Here, Vf represents the forward voltage of the semiconductor light source. In a case in which the first constant current driver 210 is configured as a linear regulator or a buck converter, the output voltage $V_{OUT}$ thereof is lower than the power supply voltage $V_{IN}$. Accordingly, in a case in which the power supply voltage $V_{IN}$ is lower than a predetermined threshold voltage $V_{IN(TH)}$, the output voltage $V_{OUT}$ is lower than the threshold voltage $V_{OUT(TH)}$. In this case, the semiconductor light sources turn off. In order to solve this problem, the bypass circuit 270 is provided.

The bypass circuit 270 includes a bypass switch SW3 and a low-voltage detection circuit 280. The bypass switch SW3 is provided between the second node n2 and the third node n3. In a state in which the power supply voltage $V_{IN}$ is lower than the predetermined threshold value $V_{IN(TH)}$, the low-voltage detection circuit 280 turns on the bypass switch SW3. In a state in which the power supply voltage $V_{IN}$ is higher than the predetermined threshold value $V_{IN(TH)}$, the low-voltage detection circuit 280 turns on the bypass switch SW3.

Preferably, the threshold voltage $V_{IN(TH)}$ is provided with hysteresis. In this case, two threshold voltages $V_{THL}$ and $V_{THH}$ (note that $V_{THL} < V_{THH}$) are defined for the low-voltage detection circuit 280. The low-voltage detection circuit 280 compares the power supply voltage $V_{IN}$ with the first threshold voltage $V_{THL}$ and the second threshold voltage $V_{THH}$. When $V_{IN} < V_{THL}$ is detected, the low-voltage detection circuit 280 turns on the bypass switch SW3. When $V_{IN} > V_{THH}$ is detected, the low-voltage detection circuit 280 turns off the bypass switch SW3.

The above is the configuration of the automotive lamp 400. Next, description will be made regarding the operation thereof.

• Normal voltage state

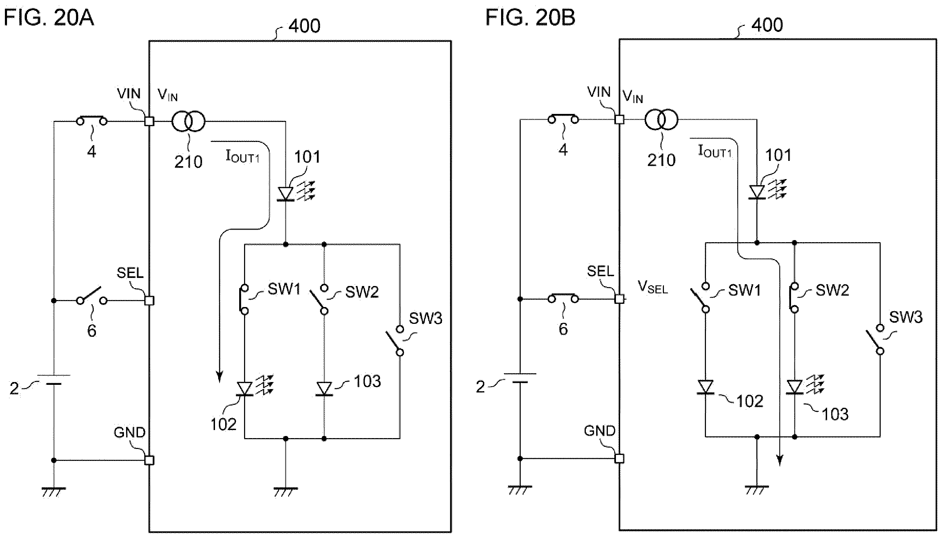

Figs. 20A and 20B are equivalent circuit diagrams in the first lighting mode and the second lighting mode, respectively, in a normal voltage state ($V_{IN} > V_{THH}$). When $V_{IN} > V_{THH}$, the bypass switch SW3 is turned off.

Referring to Fig. 20A, description will be made. In the first lighting mode, the first driving current $I_{OUT1}$ generated by the first constant current driver 210 flows through the first semiconductor light source 101, the first switch SW1, and the second semiconductor light source 102. Accordingly, the first semiconductor light source 101 and the second semiconductor light source 102 are turned on.

Referring to Fig. 20B, description will be made. In the second lighting mode, the first driving current $I_{OUT1}$ generated by the first constant current driver 210 flows through the first semiconductor light source 101, the second switch SW2, and the third semiconductor light source 103. Accordingly, the first semiconductor light source 101 and the third semiconductor light source 103 are turned on.

• Low-voltage state

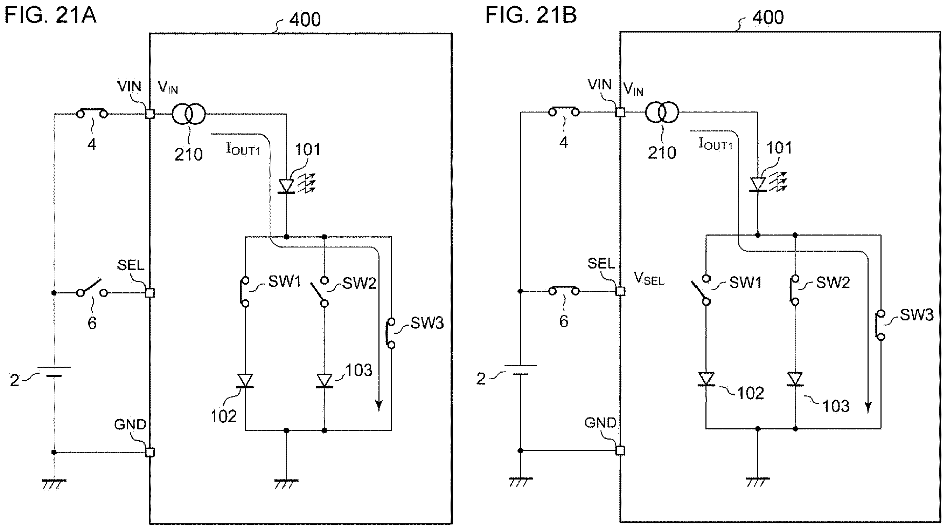

Figs. 21A and 21B are equivalent circuit diagrams in the first lighting mode and the second lighting mode, respectively, in the low-voltage state ($V_{IN} < V_{THL}$). When $V_{IN} < V_{THL}$ holds true, the bypass switch SW3 is turned on.

Referring to Fig. 21A, description will be made. In the first lighting mode, the first driving current $I_{OUT1}$ generated by the first constant current driver 210 flows through the first semiconductor light source 101 and the bypass switch SW3. Accordingly, only the first semiconductor light source 101 is turned on.

Referring to Fig. 21B, description will be made. In the second lighting mode, the first driving current $I_{OUT1}$ generated by the first constant current driver 210 flows through the first semiconductor light source 101 and the bypass switch SW3. Accordingly, only the first semiconductor light source 101 is turned on.

The above is the operation of the automotive lamp 400.

With the automotive lamp 400, in the low-voltage state, the bypass switch SW3 is turned on. This allows the emission of light from the first semiconductor light source 101 to be maintained regardless of the lighting mode.

The first semiconductor light source 101 is preferably configured as a light source that illuminates the low-beam diffusion region A1 shown in Fig. 2. This allows at least the low-beam diffusion region A1 to be illuminated brightly regardless of the mode, i.e., the high-beam mode or the low-beam mode. This ensures a minimum of field of view.

As a comparison technique, let us consider an arrangement in which the bypass switch SW3 is provided in parallel with the first semiconductor light source 101, i.e., is provided between the first node n1 and the second node n2. In such a comparison technique, when the low-voltage state occurs, in the first lighting mode (low-beam mode), only the low-beam focusing region A2 is illuminated. Furthermore, in this case, in the second lighting mode (high-beam mode), only the high-beam region A3 is illuminated. With the comparison technique, in the second lighting mode in the low-voltage state, only a distant region is illuminated brightly. In contrast, the low-beam diffusion region A1 closer to the user's vehicle becomes dim. In contrast, with the embodiment, this is capable of forming a preferable light distribution in the low-voltage state as compared with such a comparison technique.

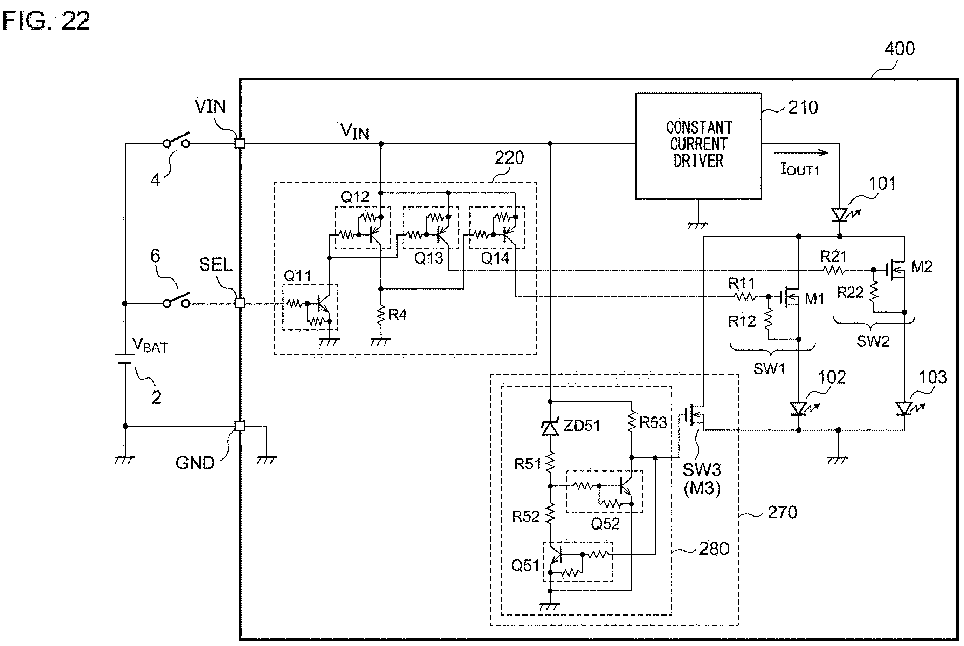

Fig. 22 is a circuit diagram showing a specific example configuration of the automotive lamp 400 shown in Fig. 19. The first switch SW1 includes a first transistor M1 configured as an N-channel MOSFET and resistors R11 and R12. Similarly, the second switch SW2 includes a second transistor M2 configured as a MOSFET and resistors R21 and R22. The first switch SW1 and the second switch SW2 are each configured such that, when a high-level signal is input to its gate, it is turned on, and such that, when a low-level signal is input to its gate, it is turned off. It should be noted that the configurations of the switches SW1 and SW2 are not restricted to those described above.

When the switching terminal SEL is set to the first state (no-input state, low level, high-impedance state), the switching circuit 220 sets the control terminal of the first switch SW1 to the high-level state, and sets the control terminal of the second switch SW2 to the low-level state. Conversely, when the switching terminal SEL is set to the second state (high level ($V_{SEL} = V_{BAT}$)), the switching circuit 220 sets the control terminal of the first switch SW1 to the low-level state, and sets the control terminal of the second switch SW2 to the high-level state.

That is to say, the switching circuit 220 supplies the first output S1 having a logical value complementary to the signal applied to the switching terminal SEL to the first switch SW1. Furthermore, the switching circuit 220 supplies the second output S2 having the same logical value as that of the signal applied to the switching terminal SEL to the second switch SW2.

The switching circuit 220 includes transistors Q11 through Q14 and a resistor R4. When the switching terminal SEL is set to the low level or the high-impedance state, the transistor Q11 is turned off, the transistor Q12 is turned off, and the transistor Q14 is turned on. The high-level signal S1 is input to the control terminal of the first switch SW1. In this state, the transistor Q13 is turned off. Accordingly, the control terminal of the second switch SW2 is set to the low-level state.

Conversely, when the switching terminal SEL is set to the high-level state, the transistor Q11 is turned on, the transistor Q12 is turned on, and the transistor Q14 is turned off. Accordingly, the control terminal of the first switch SW1 is set to the low-level state. In this state, the transistor Q13 is turned on. Accordingly, the control terminal of the second switch SW2 is set to the high-level state.

It can be understood by those skilled in this art that the configurations of the first switch SW1, the second switch SW2, the switching circuit 220, and the second constant current driver 230 are not restricted to those shown in Fig. 22.

The bypass switch SW3 includes a third transistor M3 configured as an N-channel MOSFET. The low-voltage detection circuit 280 is configured as a hysteresis comparator, including transistors Q51 and Q52, resistors R51 through R53, and a Zener diode ZD51.

Let us consider a state in which the transistor Q52 is turned off, and accordingly, the low-voltage detection circuit 280 outputs a high-level (H) output signal. In this state, the transistor Q51 is turned on. Accordingly, the voltage Vx at a connection node that couples the resistors R51 and R52 is represented by $Vx = (V_{IN} - V_{ZD}) \times R52/ (R51 + R52)$. When the voltage Vx is lower than the threshold voltage (0.6 to 0.7 V) of the transistor Q52, the transistor Q52 remains off, and the low-voltage detection circuit 280 outputs a high-level signal.

When the voltage Vx exceeds the threshold voltage (0.6 to 0.7 V) of the transistor Q52, the transistor Q52 turns on, and the low-voltage detection circuit 280 outputs a low-level signal.

Let us consider a state in which the transistor Q52 is turned on, and the low-voltage detection circuit 280 outputs a low-level (Low) signal. In this state, the transistor Q51 is turned off, and accordingly, the voltage at a connection node that couples the resistors R51 and R52 is represented by $Vx = (V_{IN} - V_{ZD})$. Description will be made assuming that the transistor Q52 has a sufficiently high base resistance.

When the voltage Vx is higher than the threshold voltage (0.6 to 0.7 V) of the transistor Q52, the transistor Q52 remains on, and the low-level detection circuit 280 outputs a low-level signal.

When the voltage Vx becomes lower than the threshold voltage (0.6 to 0.7 V) of the transistor Q52, the transistor Q52 is turned off, and the low-voltage detection circuit 280 outputs a high-level signal.

The configuration of the low-voltage detection circuit 280 is not restricted to that shown in Fig. 22. Also, the low-voltage detection circuit 280 may be configured as a hysteresis comparator employing an operational amplifier.

EMBODIMENT 5

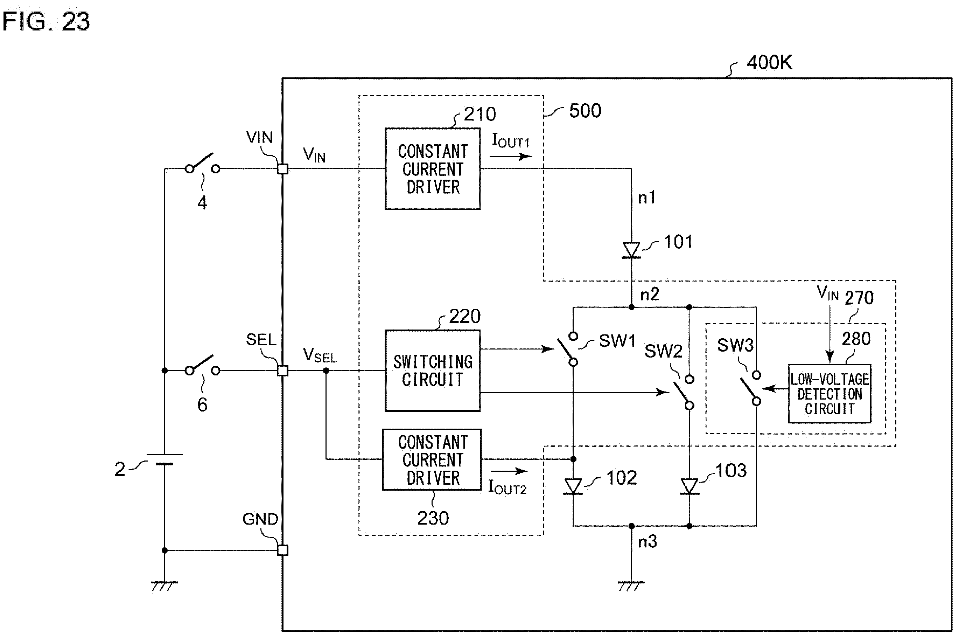

Fig. 23 is a circuit diagram of an automotive lamp 400K according to an embodiment 5. The automotive lamp 400K shown in Fig. 23 includes a second constant current driver 230 in addition to the automotive lamp 400 shown in Fig. 19.

The second constant current driver 230 is coupled to the switching terminal SEL. When the switching voltage $V_{SEL}$ is supplied to the switching terminal SEL, the second constant current driver 230 becomes active, and supplies a second driving current $I_{OUT2}$ that is smaller than the first driving current $I_{OUT1}$ to the anode of the second semiconductor light source 102. The second driving current $I_{OUT2}$ may preferably be determined to the extent that, in the second state, a region including the second semiconductor light source 102 can be visible as being turned on when viewed from the exterior of the automotive lamp 400. For example, the second driving current $I_{OUT2}$ may preferably be determined to be larger than 10 mA.

The above is the configuration of the automotive lamp 400. Next, description will be made regarding the operation thereof.

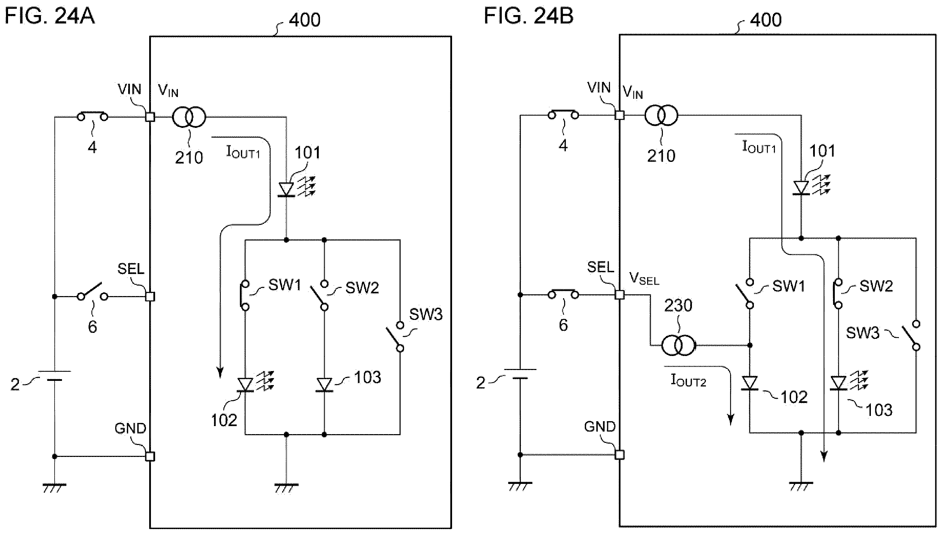

Figs. 24A and 24B are equivalent circuit diagram in the first lighting mode and the second lighting mode in the normal voltage state ($V_{IN} > V_{THH}$). When $V_{IN} > V_{THH}$ holds true, the bypass switch SW3 is turned off.

Referring to Fig. 24A, description will be made. In the first lighting mode, the first driving current $I_{OUT1}$ generated by the first constant current driver 210 flows through the first semiconductor light source 101, the first switch SW1, and the second semiconductor light source 102. Accordingly, the first semiconductor light source 101 and the second semiconductor light source 102 are turned on.

Referring to Fig. 24B, description will be made. In the second lighting mode, the first driving current $I_{OUT1}$ generated by the first constant current driver 210 flows through the first semiconductor light source 101, the second switch SW2, and the third semiconductor light source 103. Accordingly, the first semiconductor light source 101 and the third semiconductor light source 103 are turned on.

Furthermore, the second driving current $I_{OUT2}$ generated by the second constant current driver 230 flows through the second semiconductor light source 102. Accordingly, the second semiconductor light source 102 remains turned on. However, the light intensity thereof is reduced as compared with that in the first lighting mode.

The above is the operation of the automotive lamp 400.

With the automotive lamp 400, when the lighting mode is switched from the first lighting mode (low-beam mode) to the second lighting mode (high-beam mode), the third semiconductor light source 103 is additionally turned on in a state in which the second semiconductor light source remains turned on. Accordingly, this is capable of preventing a portion that had been bright from suddenly becoming dim immediately after the mode switching as viewed from the surroundings of the automotive lamp 400, thereby providing an improved appearance.

Furthermore, with the automotive lamp 400, even in the second lighting mode, the second semiconductor light source remains turned on. Accordingly, this is capable of preventing the intensity of a region illuminated by the second semiconductor light source 102 on a virtual vertical screen from changing significantly.

For example, let us consider an arrangement in which the optical system of the automotive lamp 400 is designed such that the output light of the first semiconductor light source 101, the second semiconductor light source 102, and the third semiconductor light source 103 are respectively emitted to the regions A1, A2, and A3 shown in Fig. 2. That is to say, the first semiconductor light source 101 is designed such that its output light forms the light distribution pattern A1 having an upper edge that defines a horizontal cutoff line. The second semiconductor light source 102 is designed such that its output light forms the light distribution pattern A2 having an upper edge that defines an oblique cutoff line. The third semiconductor light source 103 is designed such that its output light forms a light distribution pattern to be used in the high-beam mode.

In this case, in a case in which the second semiconductor light source 102 is designed to be turned off in the second lighting mode, the region A2 becomes dim. In particular, in this state, the region L2 is not illuminated by any one of the light sources. In contrast, with the present embodiment, the second semiconductor light source 102 remains turned on in the second lighting mode. Accordingly, in this state, light is emitted to the region A2, thereby suppressing an unnatural change in the light distribution.

Furthermore, in the second lighting mode, the driving current $I_{OUT2}$ that flows through the second semiconductor light source 102 is smaller than the driving current $I_{OUT1}$ that flows through in the first lighting mode. Accordingly, this involves only a slight increase in the heat generation (power consumption) due to the second semiconductor light source 102 remaining turned on. Accordingly, there is no need to apply an additional heat-generation countermeasure. Alternatively, such an arrangement requires only a minor countermeasure. This is capable of suppressing an increase in cost.

Furthermore, by designing the amount of the second driving current $I_{OUT2}$ to be larger than 10 mA, this allows a contact current exceeding 10 mA required to prevent oxidation of the connector terminal to flow through the switching terminal SEL. That is to say, the driving current $I_{OUT2}$ of the second semiconductor light source 102 also has a function for preventing oxidation, thereby suppressing an increase in unnecessary power consumption.

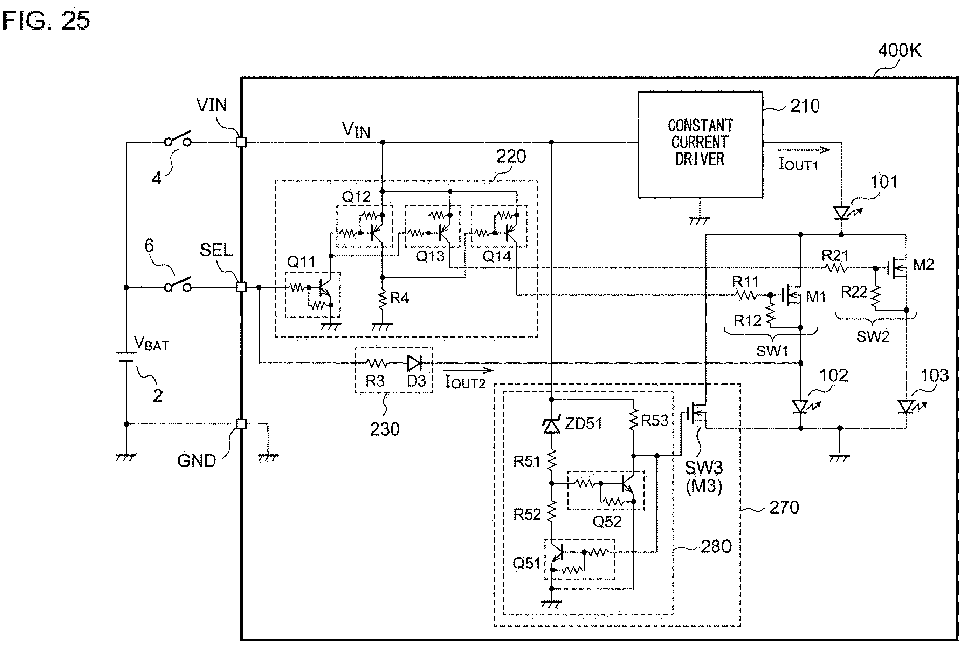

Fig. 25 is a circuit diagram showing a specific example configuration of the automotive lamp 400K shown in Fig. 23. The second constant current driver 230 includes a current-limiting resistor R3 and a diode D3. With the forward voltage of the diode D3 as Vf3, and with the forward voltage of the second semiconductor light source 102 as Vf2, the second driving current $I_{OUT2}$ is represented by the following Expression.

$$I_{OUT2} = (V_{SEL} - Vf2 - Vf3)/R3 = (V_{BAT} - Vf2 - Vf3)/R3$$

That is to say, the amount of the second driving current $I_{OUT2}$ can be determined according to the resistance value of the current-limiting resistor R3. Furthermore, with such an arrangement provided with the diode D3, this is capable of preventing the first driving current $I_{OUT1}$ generated by the first constant current driver 210 from flowing into the switching terminal SEL or the switching circuit 220. It should be noted that, in a case in which the switching circuit 220 has a sufficiently high input impedance, the diode D3 may be omitted.

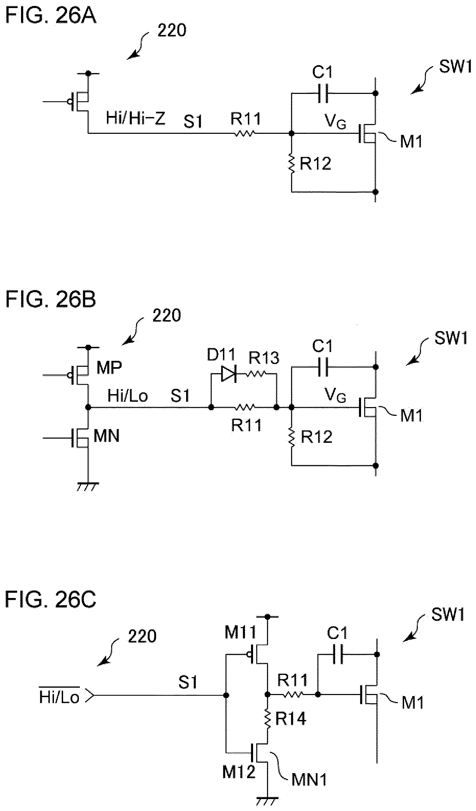

Figs. 26A through 26C are diagrams each showing a modification of the first switch SW1. Figs. 26A through 26C each show an output stage of the switching circuit 220. The same can be said of the second switch SW2.

In Fig. 26A, the switching circuit 220 includes an open-drain/open-collector output stage in the same manner as that shown in Fig. 22 or 25. The control signal S1 is designed to be switchable between two states, i.e., the high-level state (Hi) and the high-impedance state (Hi-Z). When the control signal S1 is set to the high-impedance state, the output node of the switching circuit 220 is pulled down to the low-level state by the resistors R11 and R12, which turns off the transistor M1.

In this modification, the first switch SW1 further includes a capacitor C1. One end of the capacitor C1 is coupled to the drain (or collector) of the transistor M1. The other end of the capacitor C1 is coupled to the control terminal (i.e., gate or base) of the switching transistor M1.

Description will be made regarding the turn-on operation of the switch SW1. When the gate voltage $V_G$ increases to the vicinity of the gate-source threshold voltage $V_{GS(th)}$ of the transistor M1, the rate of increase of the gate voltage $V_G$ becomes very slow due to the Miller effect caused by the capacitor C1. This allows the switch SW1 to be gradually turned on.

The same can be said of the turn-off operation. When the gate voltage $V_G$ decreases to the vicinity of the gate-source threshold voltage $V_{GS(th)}$ of the transistor M1, the rate of decrease of the gate voltage $V_G$ becomes very slow due to the Miller effect caused by the capacitor C1. This allows the switch SW1 to be gradually turned off.

With such an arrangement in which the capacitor C1 is additionally provided to the first switch SW1 (and the second switch SW2), this is capable of gradually turning on and off the switch. This allows the light intensities of the second semiconductor light source 102 and the third semiconductor light source 103 to be gradually changed. That is to say, this supports gradual turn-on and gradual turn-off. Furthermore, this is capable of preventing a sudden change in the electric potential at the anode or the cathode of each of the first semiconductor light source 101 through the third semiconductor light source 103.

Furthermore, in Fig. 26A, by designing the resistor R11 to have a resistance value that is lower than that of the resistor R12, this allows the turn-on time of the transistor to be designed to be relatively shorter than the turn-off time. This allows the on time of the first switch SW1 and the on time of the second switch SW2 to overlap. In a case in which there is an off period in which both the first switch SW1 and the second switch SW2 are turned off, the first semiconductor light source 101, the second semiconductor light source 102, and the third semiconductor light source 103 are all turned off, leading to the occurrence of a dark field of view for the driver. In contrast, with such an arrangement shown in Fig. 26A in which R11 < R12, this ensures that at least one of the first switch SW1 and the second switch SW2 turns on. This prevents the occurrence of a dark field of view for the driver.

If there is an off section in which both the first switch SW1 and the second switch SW2 are turned off, the first constant current driver 210 enters a no-load state. This leads to an increase in the output voltage $V_{OUT}$, resulting in an overvoltage state. When the first switch SW1 or the second switch SW2 is turned on in a state in which the output voltage $V_{OUT}$ increases, overcurrent flows through the LED. In contrast, with such an arrangement shown in Fig. 26A in which R11 < R12, this ensures that at least one of the first switch SW1 and the second switch SW2 is on. This suppresses the overvoltage state and overcurrent.

Fig. 26B shows an arrangement in which the switching circuit 220 includes a push-pull output stage including a high-side transistor MP and a low-side transistor MN. The control signal S1 is designed to be switchable between two states, i.e., high level (Hi) and low level (Lo). In this modification, the first switch SW1 further includes a resistor R13 and a diode D11.

When the high-side transistor MP of the output stage of the switching circuit 220 is turned on, the gate of the transistor M1 is charged via a parallel connection circuit formed of the resistors R11 and R13, thereby raising the gate voltage $V_G$. When the low-side transistor MN of the output stage of the switching circuit 220 is turned on, the gate of the transistor M1 is discharged via the resistor R11, thereby reducing the gate voltage $V_G$.

With this, there is a difference in impedance between the charging path and the discharging path. Accordingly, the gate voltage $V_G$ increases at a rate that is higher than a rate at which the gate voltage $V_G$ decreases. This allows the first switch SW1 to be turned on in a short period of time and to be turned off slowly. That is to say, this allows the light intensity of the second semiconductor light source 102 to be gradually reduced (gradual turn-off). The same can be said of the third semiconductor light source 103.

With the configuration shown in Fig. 26B, this allows the on time of the first switch SW1 and the on time of the second switch SW2 to overlap in the same manner as shown in Fig. 26A. This ensures that at least one of the first switch SW1 and the second switch SW2 is turned on. This prevents the occurrence of a dark field of view for the driver. Furthermore, this suppresses the overvoltage state and overcurrent.

The first switch SW1 shown in Fig. 26C further includes an inverter including transistors M11 and M12 and a resistor R14. That is to say, the first switch SW1 includes a negative control logic circuit configured such that, when the input signal S1 is set to the high level, the first switch SW1 is turned off, and when the input signal is set to the low level, the first switch SW1 is turned on. Accordingly, the output S1 of the switching circuit 220 has logical values that are opposite to those described above.

When the high-side transistor MP of the output stage of the switching circuit 220 is turned on, the gate of the transistor M1 is charged via a parallel connection circuit formed of the resistors R11 and R13, thereby raising the gate voltage $V_G$. When the low-side transistor MN of the output stage of the switching circuit 220 is turned on, the gate of the transistor M1 is discharged via the resistor R11, thereby lowering the gate voltage $V_G$.

When the control signal S1 is set to the low level, the transistor M11 is turned on, and accordingly, the gate of the transistor M1 is charged via the resistor R11. In this state, the gate voltage $V_G$ increases, thereby turning on the transistor M1. Conversely, when the control signal S1 is set to the high level, the transistor M12 is turned on, and accordingly, the gate of the transistor M1 is discharged via the resistors R11 and R14. In this state, the gate voltage $V_G$ decreases, thereby turning off the transistor M1.

With this, there is a difference in impedance between the charging path and the discharging path. Accordingly, the gate voltage $V_G$ increases at a rate that is higher than a rate at which the gate voltage $V_G$ decreases. As with the arrangements shown in Figs. 26A and 26B, this allows the first switch SW1 to be turned on in a short period of time, and to be turned off slowly. That is to say, this allows the light intensity of the second semiconductor light source 102 to be gradually reduced (gradual turn-off). The same can be said of the third semiconductor light source 103.

With the configuration shown in Fig. 26C, this allows the on time of the first switch SW1 and the on time of the second switch SW2 to overlap in the same manner as those shown in Figs. 26A and 26B. This prevents the occurrence of a dark field of view due to the first semiconductor light source 101 through the third semiconductor light source 103 tuning off at the same time.

Furthermore, with the configuration shown in Fig. 26C, this ensures that at least one of the first switch SW1 and the second switch SW2 are turned on. Accordingly, this suppresses the overvoltage state and overcurrent.

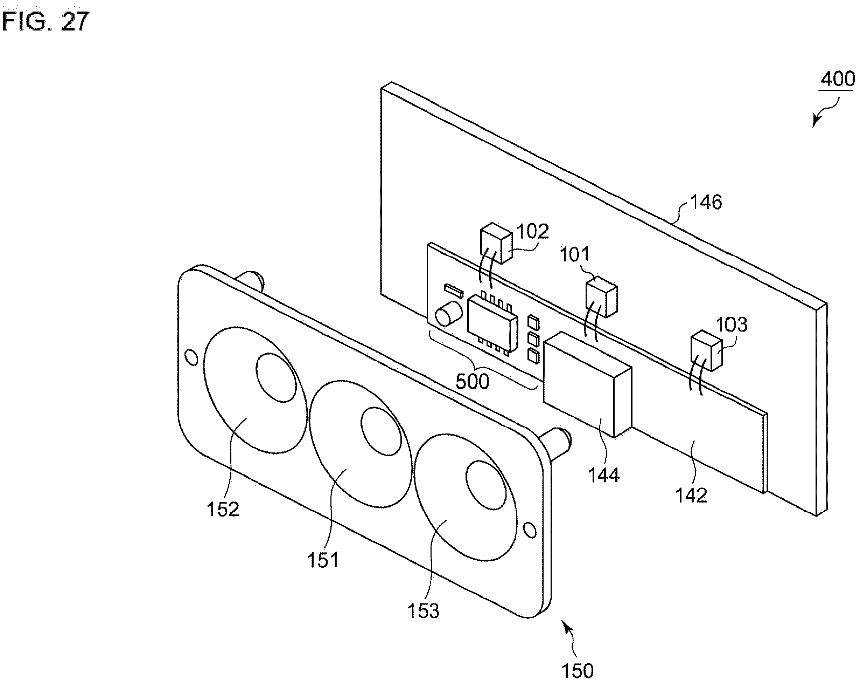

Fig. 27 is a perspective diagram of a light source module, which is an example of the automotive lamp 400. The first semiconductor light source 101, the second semiconductor light source 102, and the third semiconductor light source 103 are arranged side-by-side in one direction on a radiator plate 146. The order of the first semiconductor light source 101, the second semiconductor light source 102, and the third semiconductor light source 103 is not restricted in particular. Also, the three semiconductor light sources, i.e., the first semiconductor light source 101 through the third semiconductor light source 103 may be arranged such that they define the vertices of a triangle.

Components of the lighting circuit 500 and a connector 144 are mounted on a printed circuit board 142. The connector 144 includes three terminals, i.e., an input terminal VIN, a switching terminal SEL, and a ground terminal GND. The wiring of the printed circuit board 142 is coupled to the electrodes of the first semiconductor light source 101 through the third semiconductor light source 103 via bonding wires. It should be noted that the printed circuit board 142 may be omitted. In this case, the components of the lighting circuit 500 and the connector 144 may be directly mounted on the radiator plate 146. Furthermore, in the present embodiment, the heat generation of the automotive lamp 400 is reduced. Accordingly, the radiator plate 146 having a thin thickness may be employed. However, instead of such a thin radiator plate 146, a heat sink having a large thickness may be employed. The connector 144 is not restricted to such a connector to be mounted. Also, other types of connectors such as a card edge connector or the like may be employed.

A lens module 150 includes a first lens 151, a second lens 152, and a third lens 153. The first lens 151 receives the output beam of the first semiconductor light source 101, and projects the output beam to a low-beam diffusion region A1. The second lens 152 receives the output beam of the second semiconductor light source 102, and projects it to a low-beam focusing region A2. The third lens 153 receives the output beam of the third semiconductor light source 103, and projects it to a high-beam region A3.

Next, description will be made regarding modifications relating to the embodiment 5.

MODIFICATION 5.1

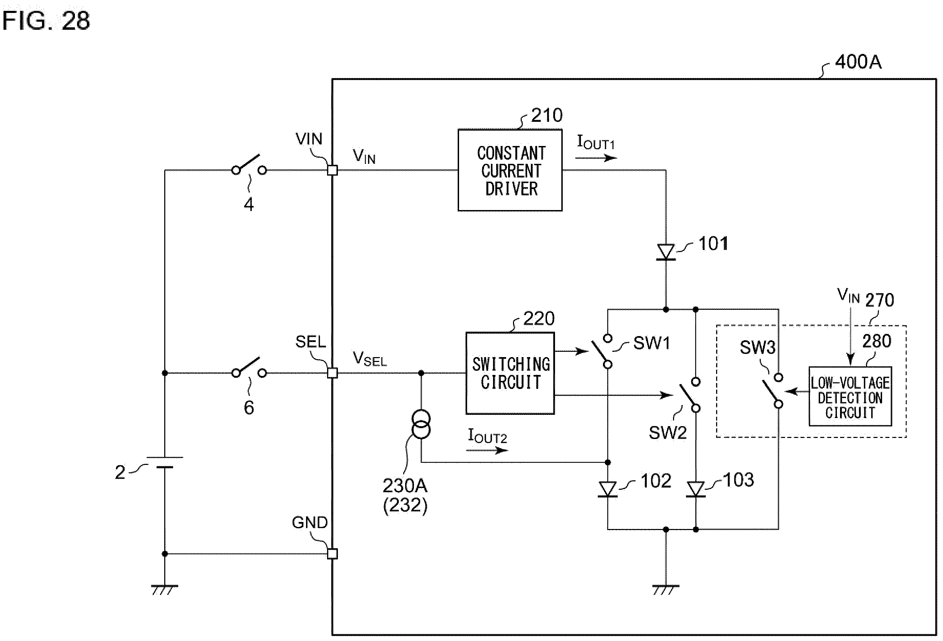

Fig. 28 is a block diagram of an automotive lamp 400A according to a modification 5.1. In this modification, a second constant current driver 230A is configured as a constant current source 232 that receives the supply of power from the switching terminal SEL. When the switching signal $V_{SEL}$ is set to the high level in the second lighting mode, the constant current source 232 is turned on. In this state, the second driving current $I_{OUT2}$ is supplied to the second semiconductor light source 102.

With this modification, the same effects can be obtained as those of the automotive lamp 400 shown in Fig. 23.

MODIFICATION 5.2

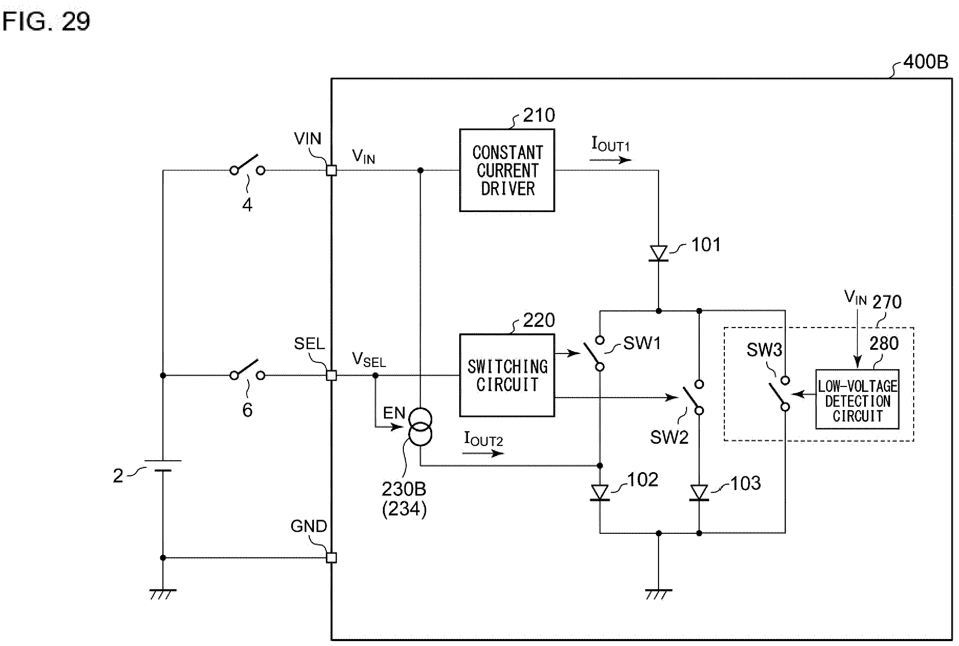

Fig. 29 is a block diagram of an automotive lamp 400B according to a modification 5.2. In this modification, a second constant current driver 230B is configured as a constant current source 234 with an enable terminal configured to receive a supply of power from the input terminal VIN. The switching signal $V_{SEL}$ is input to the enable terminal EN of the constant current source 234. When the switching signal $V_{SEL}$ is set to the high level in the second lighting mode, the constant current source 232 is turned on. In this state, the second driving current $I_{OUT2}$ is supplied to the second semiconductor light source 102.

With the automotive lamp 400B, in the second lighting mode, this is capable of preventing the illumination region of the semiconductor light source 102 from becoming significantly dimmer in the second lighting mode.

It should be noted that, in the automotive lamp 400B, the switching terminal SEL has a high impedance. Accordingly, during the second lighting mode, almost no contact current flows. Accordingly, in order to prevent oxidation of the connector terminal, there is a need to additionally provide an arrangement configured to flow contact current. In other words, with an arrangement configured to supply the power supply voltage of the second constant current driver 230 from the switching terminal SEL, i.e., with an arrangement in which the second driving current $I_{OUT2}$ is supplied from the switching terminal SEL, the operating current of the second constant current driver 230 continuously flows during the second lighting mode. Such arrangement requires no additional configuration for preventing oxidation of the connector terminal.

MODIFICATION 5.3

The positions of the second switch SW2 and the third semiconductor light source 103 may be interchanged.

MODIFICATION 5.4

Each bipolar transistor may be replaced by a Metal Oxide Semiconductor Field Effect Transistor (MOSFET). In this case, the base, collector, and emitter correspond to the gate, drain, and source, respectively. Also, each NPN (N-channel) transistor may be replaced by a PNP (P-channel) transistor.

MODIFICATION 5.5

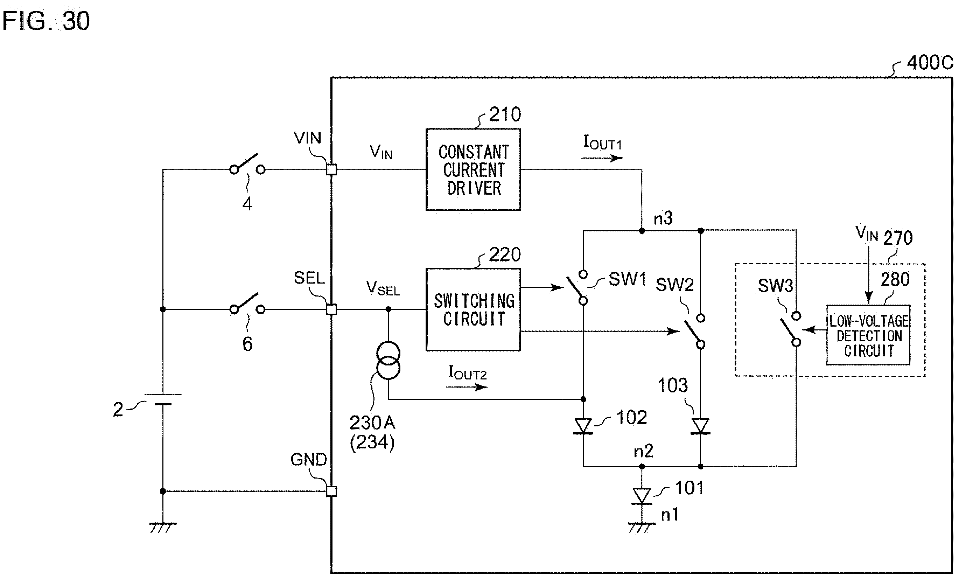

Fig. 30 is a block diagram of an automotive lamp 400C according to a modification 5.5. In this modification, the layout of the first semiconductor light source 101 through the third semiconductor light source 103 has a relation such that they are arranged by top/bottom inversion of the layout of those described above. That is to say, Figs. 19, 23, 28, and 29 each show an arrangement in which the first node n1 is arranged on the high-voltage side, and the third node n3 is arranged on the ground side. In contrast, Fig. 30 shows an arrangement in which the first node n1 is arranged on the ground side, and the third node n3 is arranged on the high-voltage side. The arrangement shown in Fig. 30 has the same configuration as the automotive lamp 400A shown in Fig. 28 except for the layout described above.

With this modification, in the second lighting mode, the current $I_{OUT2}$ generated by the second constant current driver 230A flows through the first semiconductor light source 101 in addition to the second semiconductor light source 102. This is the point of difference from the arrangement shown in Fig. 28.

MODIFICATION 5.6

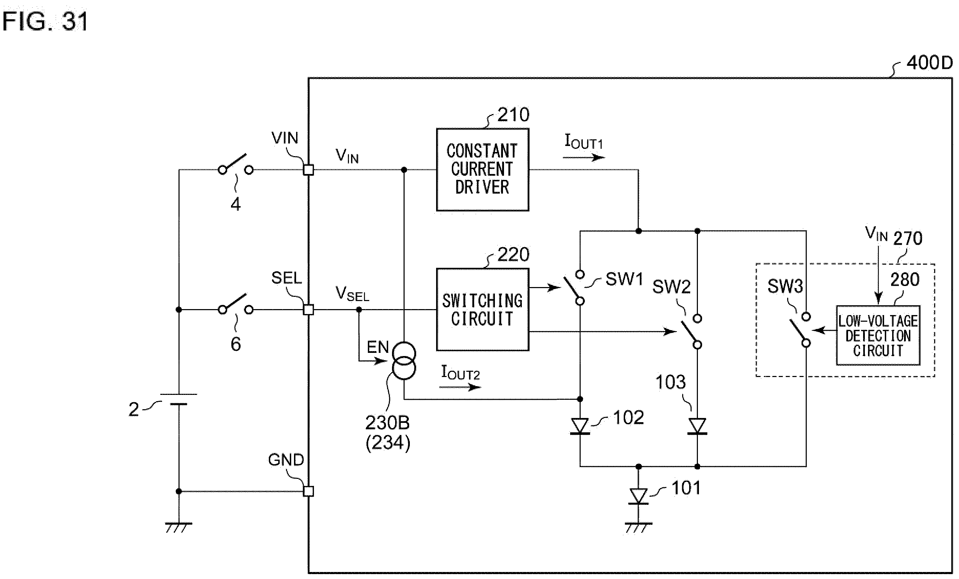

Fig. 31 is a block diagram of an automotive lamp 400D according to a modification 5.6. In this modification, the first node n1 is arranged on the ground side, and the third node n3 is arranged on the high-voltage side. Fig. 31 shows the same configuration as that of the automotive lamp 400B shown in Fig. 29 except for the layout described above.

With this modification, in the second lighting mode, the current $I_{OUT2}$ generated by the second constant current driver 230A flows through the first semiconductor light source 101 in addition to the second semiconductor light source 102. This is the point of difference from the arrangement shown in Fig. 29.

MODIFICATION 5.7

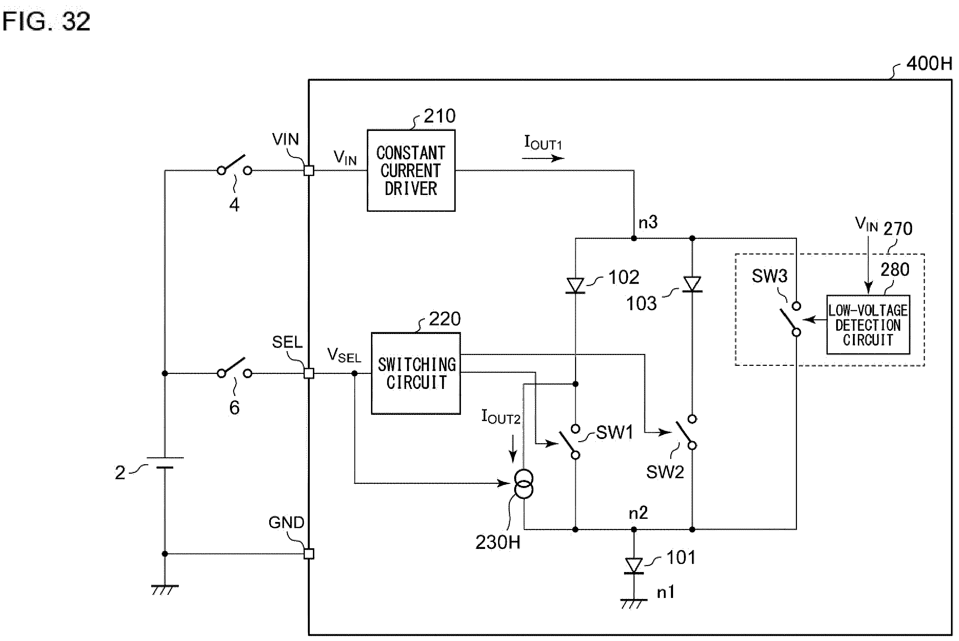

Fig. 32 is a block diagram of an automotive lamp 400H according to a modification 5.7. In this modification, the first node n1 is arranged on the ground side, and the third node n3 is arranged on the high-voltage side.

A second constant current driver 230H is coupled in parallel with the first switch SW1. In the first lighting mode, the switching circuit 220 turns on the first switch SW1 and turns off the second switch SW2. In the second lighting mode, the switching circuit 220 turns off the first switch SW1 and turns on the second switch SW2.

When the switching terminal SEL is set to the first state, the second constant current driver 230H is disabled. On the other hand, when the switching terminal SEL is set to the second state, the second constant current driver 230H is enabled. In this state, the second constant current driver 230H generates the second driving current $I_{OUT2}$.

EMBODIMENT 6

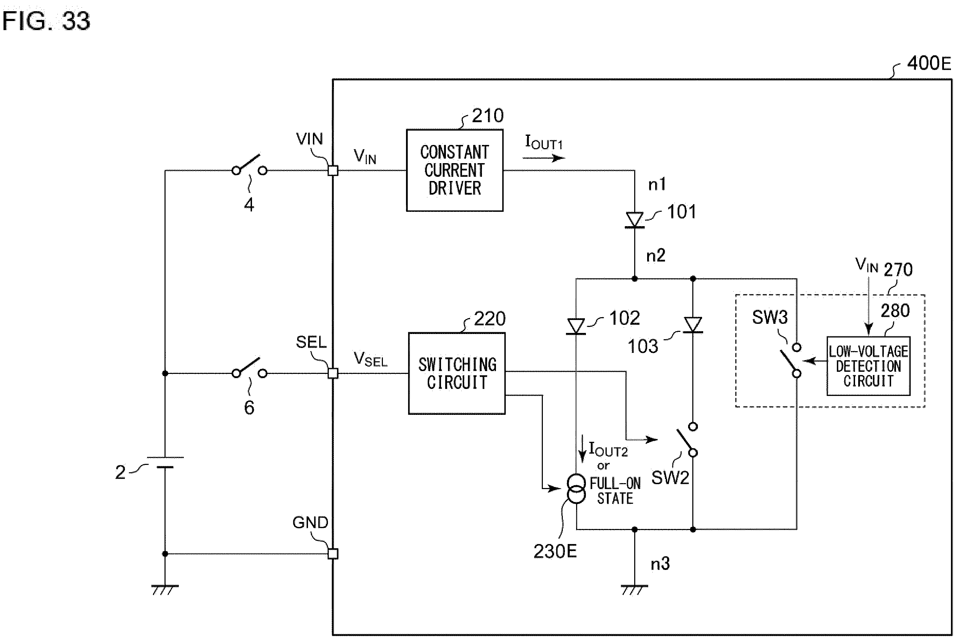

Fig. 33 is a block diagram of an automotive lamp 400E according to an embodiment 6. A lighting circuit 500E includes the first constant current driver 210, the switching circuit 220, a second constant current driver 230E, and the second switch SW2.

The second constant current driver 230E is coupled between the third node n3 and the second semiconductor light source 102 on the first path. The second constant current driver 230E is configured to be switchable between a full-on state and a constant current state in which the second driving current $I_{OUT2}$ that is smaller than the first driving current $I_{OUT1}$ is generated. The full-on state is a state in which the impedance is set to a very small value, which corresponds to the on state of the first switch SW1.

When the switching terminal SEL is set to the first state, the switching circuit 220 sets the second constant current driver 230E to the full-on state, and turns off the second switch SW2. When the switching terminal SEL is set to the second state, the switching circuit 220 sets the second constant current driver 230E to the constant current state, and turns on the second switch SW2.

With the embodiment 6, as with the embodiment 5, in the first lighting mode, this allows the first semiconductor light source 101 and the second semiconductor light source 102 to emit light brightly using the first driving current $I_{OUT1}$. Furthermore, in the second lighting mode, this allows the first semiconductor light source 101 and the third semiconductor light source 103 to emit light brightly using the first driving current $I_{OUT1}$, and allows the second semiconductor light source 102 to emit light using the second driving current $I_{OUT2}$ more dimly than in the first lighting mode.

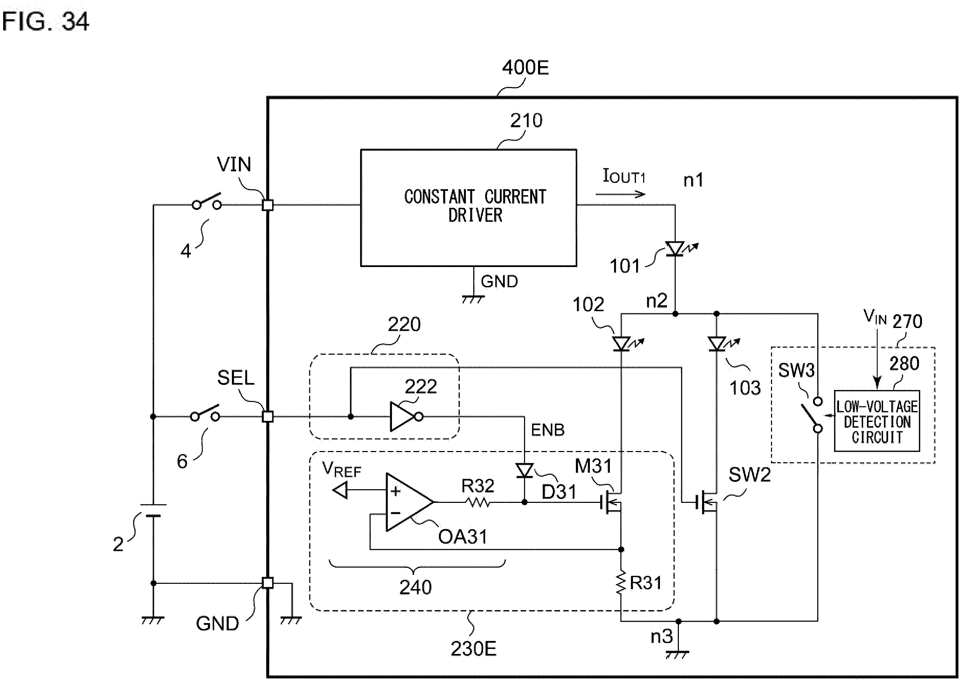

Fig. 34 is a circuit diagram showing a specific example configuration of the automotive lamp 400E shown in Fig. 33. The second constant current driver 230E includes a first transistor M31, a first resistor R31, a feedback circuit 240, and a diode D31. The first transistor M31 and the first resistor R31 are coupled in series between the second semiconductor light source 102 and the third node n3. The feedback circuit 240 controls the voltage at the control terminal (gate) of the first transistor M31 such that the voltage drop $V_{R31}$ across the first resistor R31 approaches a target voltage $V_{REF}$. The feedback circuit 240 includes an operational amplifier OA31 and a resistor R32. The cathode of the diode D31 is coupled to the gate of the first transistor M31. An inverted enable signal ENB is input to the anode of the diode D31.

The switching circuit 220 controls the second switch SW2 and the current driver 230E according to the state of the switching terminal SEL. In this example, when the switching terminal SEL is set to the first state (high impedance, low), the switching circuit 220 outputs the high-level inverted enable signal ENB, and outputs a low-level signal to the gate of the second switch SW2. When the switching terminal SEL is set to the second state (high), the switching circuit 220 outputs the low-level inverted enable signal ENB, and outputs a high-level signal to the gate of the second switch SW2. The switching circuit 220 includes an inverter 222.

When the switching terminal SEL is set to the first state, the high-level inverted enable signal EN is input to the second constant current driver 230E. When the inverted enable signal EN is set to the high level, the gate of the first transistor M31 is fixed to the high level, which disables the feedback circuit 240. In this state, the first transistor M31, i.e., the second constant current driver 230E is set to the full-on state. Furthermore, the second switch SW2 is turned off. Accordingly, the lighting mode is set to the first lighting mode.

When the switching terminal SEL is set to the second state, the low-level inverted enable signal EN is input to the second constant current driver 230E. In this state, the feedback circuit 240 is activated, so as to set the second constant current driver 230E to a constant current state. In the constant current state, the second driving current $I_{OUT2}$ is stabilized to $I_{OUT2} = V_{REF}/R31$. In this case, the second switch SW2 is turned on. Accordingly, the lighting mode is set to the second lighting mode.

Description will be made regarding modifications relating to the embodiment 6.

MODIFICATION 6.1

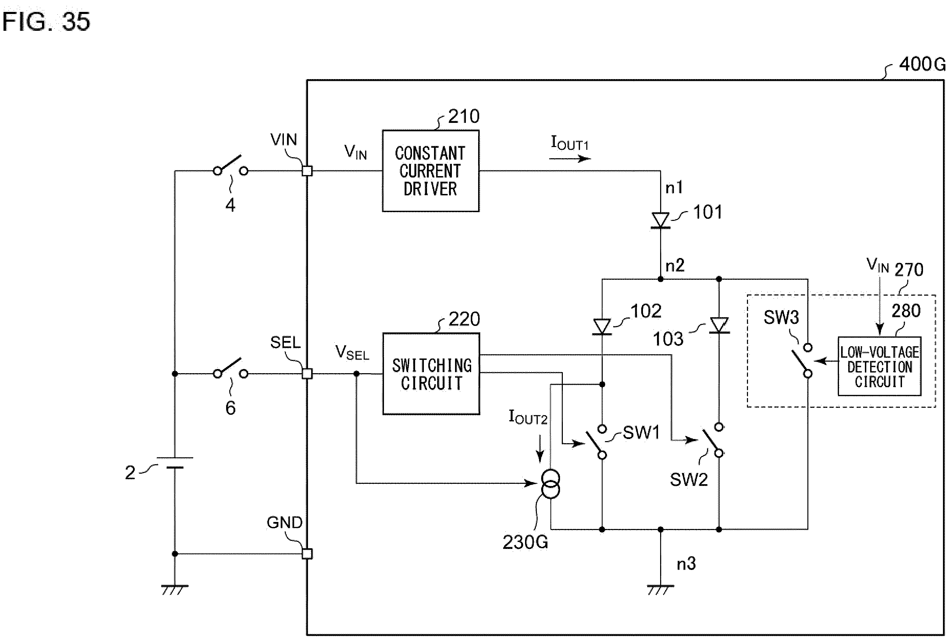

Fig. 35 is a circuit diagram of an automotive lamp 400G according to a modification 6.1. The automotive lamp 400G can be regarded as the same configuration as that shown in Fig. 33 except that the second constant current driver 230E shown in Fig. 33 is divided into a second constant current driver 230G and a first switch SW1.

MODIFICATION 6.2

In the second lighting mode, the first constant current driver 210 may increase the first driving current $I_{OUT1}$ as compared with that in the first lighting mode.

MODIFICATION 6.3

As described in the modifications 5.5 (Fig. 28) and 5.6 (Fig. 29) of the embodiment 5, in the embodiment 6, the layout of the first semiconductor light source 101 through the third semiconductor light source 103 may be arranged by top/bottom inversion of the layout of those described above.

EMBODIMENT 7

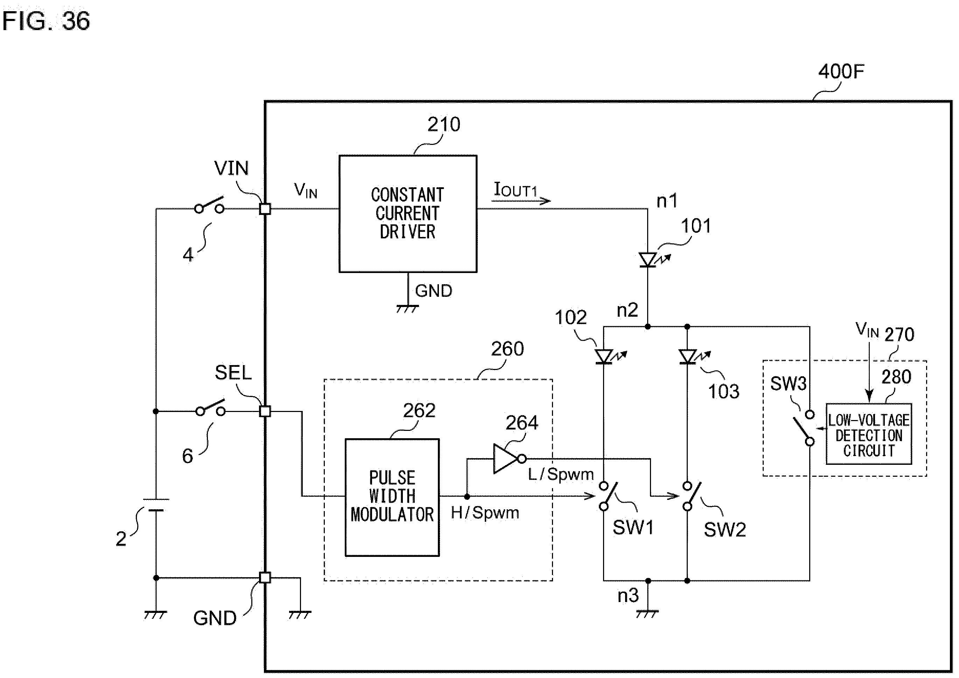

Fig. 36 is a block diagram of an automotive lamp 400F according to an embodiment 7. When the switching terminal SEL is set to the first state (low level, high impedance), a switch control circuit 260 turns on the first switch SW1 and turns off the second switch SW2. Furthermore, when the switching terminal SEL is set to the second state (high level), the switch control circuit 260 switches on and off the first switch SW1 according to a pulse signal Spwm having a first duty cycle d1 that is lower than 50%, and switches on and off the second switch SW2 according to a signal SpwmB complementary to the pulse signal Spwm.

The switch control circuit 260 includes a pulse width modulator 262 and an inverter 264. When the switching terminal SEL is set to the first state (low level, high impedance), the pulse width modulator 262 outputs a high-level signal. When the switching terminal SEL is set to the second state (high level), the pulse width modulator 262 outputs the pulse signal Spwm. The output of the pulse width modulator 262 is supplied to the first switch SW1. Furthermore, the output of the pulse width modulator 262 is inverted by the inverter 264, and the inverted signal is supplied to the second switch SW2.

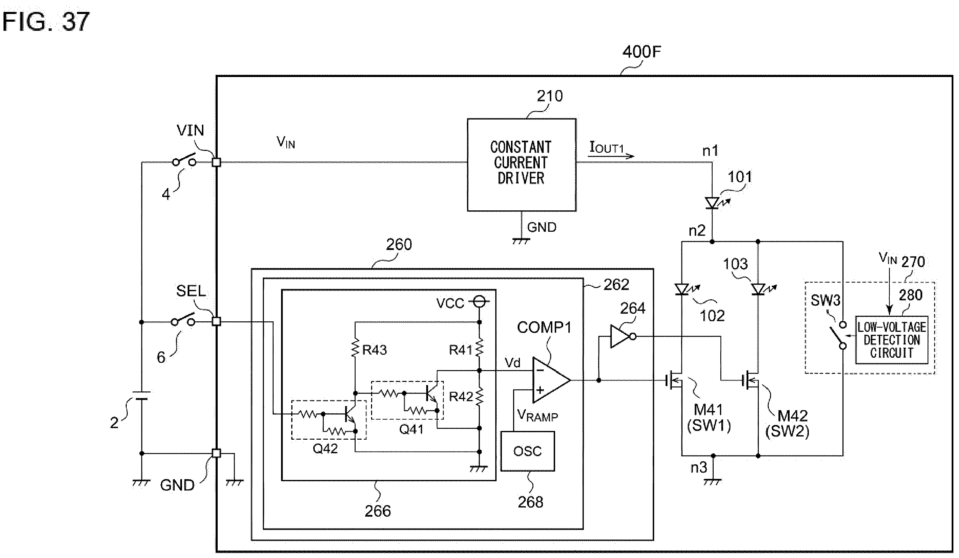

Fig. 37 is a circuit diagram showing a specific example configuration of the automotive lamp 400F shown in Fig. 36. The first switch SW1 and the second switch SW2 are configured as N-channel transistors M41 and M42.

The pulse width modulator 262 includes a voltage generator 266, a comparator COMP1, and an oscillator 268. In the first state, the voltage generator 266 generates the voltage Vd of 0 V. In the second state, the voltage generator 266 generates the voltage Vd having a predetermined level. The oscillator 268 generates a cyclic signal $V_{RAMP}$ configured as a ramp wave or a triangle wave. The comparator COMP1 compares the voltage Vd with the cyclic signal $V_{RAMP}$.

In the first state, the output of the comparator COMP1 is fixed to the high level. In the second state, as the output of the comparator COMP1, the pulse signal Spwm is output with a duty cycle d1 that corresponds to the voltage Vd.

The voltage generator 266 includes resistors R41 through R43 and transistors Q41 and Q42. When the switching terminal SEL is set to the first state (low level, high impedance), the transistor Q42 is turned off and the transistor Q41 is turned on. In this state, the voltage Vd is set to 0 V. When the switching terminal SEL is set to the second state (high level), the transistor Q42 is turned on and the transistor Q41 is turned off. With this, the voltage Vd is set to a voltage obtained by dividing the power supply voltage Vcc by the resistors R41 and R42.

Description will be made regarding the operation of the automotive lamp 400F shown in Figs. 36 and 37. When the switching terminal SEL is set to the first state (low level), the first switch SW1 is turned on and the second switch SW2 is turned off. Accordingly, the first driving current $I_{OUT1}$ generated by the first constant current driver 210 flows through the first semiconductor light source 101 and the second semiconductor light source 102. That is to say, the lighting mode is set to the first lighting mode.

When the switching terminal SEL is set to the first state (low level), the switch control circuit 260 generates the pulse signal Spwm having a duty cycle d1 that is smaller than 50%, so as to drive the transistor M41. Furthermore, the transistor M42 is driven by the inverted signal of the pulse signal Spwm. The first driving current $I_{OUT1}$ generated by the first constant current driver 210 flows through the second semiconductor light source 102 during a period of Tp × d1, and flows through the third semiconductor light source 103 during a period of Tp × (1 - d1) after the first driving current $I_{OUT1}$ flows through the first semiconductor light source 101. Here, Tp represents the period of the pulse signal Spwm. In this arrangement, d1 is designed such that d1 < 50% holds true. Accordingly, the semiconductor light source 102 emits light relatively dimly. In contrast, the semiconductor light source 103 emits light relatively brightly. With this, the second lighting mode is supported.

Description will be made regarding modifications relating to the embodiment 7.

MODIFICATION 7.1

In the second lighting mode, the first constant current driver 210 may increase the first driving current $I_{OUT1}$ as compared with the first lighting mode.

MODIFICATION 7.2

As described in the modifications 5.5 (Fig. 28) and 5.6 (Fig. 29) of the embodiment 5, in the embodiment 7, the layout of the first semiconductor light source 101 through the third semiconductor light source 103 may be arranged by top/bottom inversion of the layout of those described above.

Description has been made above regarding the embodiments. The above-described embodiments have been described for exemplary purposes only. Rather, it can be readily conceived by those skilled in this art that various modifications may be made by making various combinations of the aforementioned components or processes, which are also encompassed in the technical scope of the present invention.

[INDUSTRIAL APPLICABILITY]

The present disclosure is applicable to illumination for an automobile or the like.

[DESCRIPTION OF THE REFERENCE NUMERALS]

100, 400 automotive lamp, VIN input terminal, SEL switching terminal, 101 first semiconductor light source, 102 second semiconductor light source, 103 third semiconductor light source, 200, 500 lighting circuit, 210 first constant current driver, SW1 first switch, SW2 second switch, 220 switching circuit, 230 second constant current driver, 240 feedback circuit, 260 switch control circuit, 262 pulse width modulator, 264 inverter.

**Claims**

**1.** An automotive lamp comprising:

a first semiconductor light source coupled between a first node and a second node;

a second semiconductor light source coupled between the second node and a third node so as to form a first path;

a third semiconductor light source coupled between the second node and the third node so as to form a second path parallel to the first path; and

a lighting circuit structured to drive the first semiconductor light source, the second semiconductor light source, and the third semiconductor light source,

wherein the lighting circuit is structured to be switchable between a first lighting mode in which the first semiconductor light source and the second semiconductor light source are turned on and the third semiconductor light source is turned off, and a second lighting mode in which the first semiconductor light source and the third semiconductor light source are turned on and the second semiconductor light source is turned on so as to be dimmer than in the first lighting mode.

2. The automotive lamp according to claim 1, further comprising:

an input terminal structured to receive a power supply voltage that also has a function as a turn-on instruction; and

a switching terminal structured to be controlled by an external circuit such that it is set to a first state in the first lighting mode and to a second state in the second lighting mode,

wherein the lighting circuit comprises:

a first constant current driver having an output node coupled to the first node, and structured to output a first driving current when the power supply voltage is supplied to the input terminal;

a first switch coupled between the second node and the second semiconductor light source on the first path;

a second switch coupled in series with the third semiconductor light source on the second path;

a switching circuit structured to turn on the first switch and turn off the second switch when the switching terminal is set to the first state, and to turn off the first switch and turn on the second switch when the switching terminal is set to the second state; and

a second constant current driver structured to supply a second driving current that is smaller than the first driving current to an intermediate node that couples the second semiconductor light source and the first switch when the switching terminal is set to the second state.

3. The automotive lamp according to claim 2, wherein the second constant current driver comprises a current-limiting resistor arranged between the switching terminal and the intermediate node.

4. The automotive lamp according to claim 3, wherein the second constant current driver further comprises a diode arranged in series with the current-limiting resistor between the switching terminal and the intermediate node.

5. The automotive lamp according to any one of claims 2 through 4, wherein the second driving current flows via the switching terminal.

6. The automotive lamp according to claim 5, wherein the second driving current is larger than 10 mA.

7. The automotive lamp according to any one of claims 2 through 6, wherein, in the second state, a non-zero switching voltage is input to the switching terminal,

and wherein, in the second state, power is supplied to the second constant current driver via the switching terminal.

8. The automotive lamp according to claim 1, further comprising:

an input terminal structured to receive a power supply voltage that also functions as a turn-on instruction; and

a switching terminal structured to be controlled by an external circuit such that it is set to a first state in the first lighting mode and to a second state in the second lighting mode,

wherein the lighting circuit comprises:

a first constant current driver having an output node coupled to the first node, and structured to output a first driving current when the power supply voltage is supplied to the input terminal;

a second constant current driver coupled between the second semiconductor light source and the third node on the first path, and structured to be switchable between a constant current state in which a second driving current that is smaller than the first driving current is generated and a full-on state;

a second switch coupled in series with the third semiconductor light source on the second path; and

a switching circuit structured to set the second constant current driver to the full-on state and turn off the second switch when the switching terminal is set to the first state, and to set the second constant current driver to the constant current state and to turn on the second switch when the switching terminal is set to the second state.

9. The automotive lamp according to claim 8, wherein the second constant current driver comprises:

a first transistor and a first resistor coupled in series between the second semiconductor light source and the third node on the first path; and
a feedback circuit structured to be activated when the switching terminal is set to the second state, so as to control a voltage applied to a control terminal of the first transistor such that voltage drop across the first resistor approaches a target voltage.

10. The automotive lamp according to claim 1, further comprising:

an input terminal structured to receive a power supply voltage that also functions as a turn-on instruction; and
a switching terminal structured to be controlled by an external circuit such that it is set to a first state in the first lighting mode and to a second state in the second lighting mode,
wherein the lighting circuit comprises:

a first constant current driver having an output node coupled to the first node, and structured to output a first driving current when the power supply voltage is supplied to the input terminal;
a first switch coupled in series with the second semiconductor light source on the first path;
a second switch coupled in series with the third semiconductor light source on the second path; and

a switch control circuit structured to turn on the first switch and turn off the second switch when the switching terminal is set to the first state, and to switch on and off the first switch according to a pulse signal having a first duty cycle that is lower than 50% and to switch on and off the second switch according to a signal complementary to the pulse signal when the switching terminal is set to the second state.

11. The automotive lamp according to any one of claims 8 through 10, wherein, in the second lighting mode, the first constant current driver increases the first driving current as compared with the first lighting mode.

12. The automotive lamp according to any one of claims 2 through 11, wherein, when the lighting mode is switched between the first lighting mode and the second lighting mode, a period in which the first switch and the second switch are turned on at the same time is inserted.

13. The automotive lamp according to any one of claims 1 through 12, wherein an output light of the first semiconductor light source forms a light distribution pattern having an upper edge that defines a horizontal cutoff line,

wherein an output light of the second semiconductor light source forms a light distribution pattern having an upper edge that defines an oblique cutoff line,
and wherein an output light of the third semiconductor light source forms a light distribution pattern to be used for a high beam.

14. An automotive lamp comprising:

a first semiconductor light source coupled between a first node and a second node;
a second semiconductor light source coupled between the second node and a third node so as to form a first path;
a third semiconductor light source coupled between the second node and the third node so as to form a second path that is parallel to the first path;
a lighting circuit structured to receive a power supply voltage, structured to turn on the first semiconductor light source and the second semiconductor light source in a first lighting mode, and to turn on the first semiconductor light source and the third semiconductor light source in a second lighting mode; and
a bypass circuit arranged between the second node and the third node, and structured to turn on when the power supply voltage becomes lower than a predetermined first threshold value.

15. The automotive lamp according to claim 14, wherein the bypass switch turns off when the power supply voltage exceeds a second threshold value that is higher than the first threshold value.

**16.** The automotive lamp according to claim 14 or 15, wherein an output light of the first semiconductor light source forms a light distribution pattern having an upper edge that defines a horizontal cutoff line,

wherein an output light of the second semiconductor light source forms a light distribution pattern having an upper edge that defines an oblique cutoff line,
and wherein an output light of the third semiconductor light source forms a light distribution pattern to be used for a high beam.

**17.** The automotive lamp according to any one of claims 14 through 16, wherein, in the second lighting mode, the lighting circuit turns on the second semiconductor light source so as to be dimmer than in the first lighting mode.

**18.** The automotive lamp according to any one of claims 14 through 17, further comprising:

an input terminal structured to receive a power supply voltage that also functions as a turn-on instruction; and
a switching terminal structured to be controlled from an external circuit such that it is set to a first state in the first lighting mode and set to a second state in the second lighting mode,
wherein the lighting circuit comprises:
a first constant current driver having an output node coupled to the first node, and structured to output a first driving current when the power supply voltage is supplied to the input terminal;
a first switch coupled between the second node and the second semiconductor light source on the first path;
a second switch coupled in series with the third semiconductor light source on the second path;
a switching circuit structured to turn on the first switch and turn off the second switch when the switching terminal is set to the first state, and to turn off the first switch and turn on the second switch when the switching terminal is set to the second state; and
a second constant current driver structured to supply a second driving current that is smaller than the first driving current to an intermediate node that couples the second semiconductor light source and the first switch when the switching terminal is set to the second state.

**19.** The automotive lamp according to any one of claims 14 through 17, further comprising:

an input terminal structured to receive a power supply voltage that also functions as a turn-on instruction; and
a switching terminal structured to be controlled by an external circuit such that it is set to a first state in the first lighting mode and to a second state in the second lighting mode,
wherein the lighting circuit comprises:

a first constant current driver having an output node coupled to the first node, and structured to output a first driving current when the power supply voltage is supplied to the input terminal;
a second constant current driver coupled between the second semiconductor light source and the third node on the first path, and structured to be switchable between a constant current state in which a second driving current that is smaller than the first driving current is generated and a full-on state;
a second switch coupled in series with the third semiconductor light source on the second path; and
a switching circuit structured to set the second constant current driver to the full-on state and turn off the second switch when the switching terminal is set to the first state, and to set the second constant current driver to the constant current state and to turn on the second switch when the switching terminal is set to the second state.

**20.** The automotive lamp according to any one of claims 14 through 17, further comprising:

an input terminal structured to receive a power supply voltage that also functions as a turn-on instruction; and
a switching terminal structured to be controlled by an external circuit such that it is set to a first state in the first lighting mode and to a second state in the second lighting mode,
wherein the lighting circuit comprises:

a first constant current driver having an output node coupled to the first node, and structured to output a first driving current when the power supply voltage is supplied to the input terminal;
a first switch coupled in series with the second semiconductor light source on the first path;
a second switch coupled in series with the third semiconductor light source on the second path; and

a switch control circuit structured to turn on the first switch and turn off the second switch when the switching terminal is set to the first state, and to switch on and off the first switch according to a pulse signal having a first duty cycle that is lower than 50% and to switch on and off the second switch according to a signal complementary to the pulse signal when the switching terminal is set to the second state.

FIG. 1

FIG. 2

FIG. 3

EP 4 329 432 A1

FIG. 4

EP 4 329 432 A1

FIG. 5

EP 4 329 432 A1

FIG. 6

FIG. 7A

FIG. 7B

FIG. 7C

FIG. 8

EP 4 329 432 A1

FIG. 9

EP 4 329 432 A1

FIG. 10

EP 4 329 432 A1

FIG. 11

EP 4 329 432 A1

FIG. 12

EP 4 329 432 A1

FIG. 13

EP 4 329 432 A1

FIG. 14

EP 4 329 432 A1

FIG. 15

EP 4 329 432 A1

FIG. 16

EP 4 329 432 A1

FIG. 17

EP 4 329 432 A1

EP 4 329 432 A1

# FIG. 18

FIG. 19

FIG. 20A

FIG. 20B

EP 4 329 432 A1

FIG. 21A

FIG. 21B

EP 4 329 432 A1

FIG. 22

EP 4 329 432 A1

FIG. 23

FIG. 24A

FIG. 24B

FIG. 25

EP 4 329 432 A1

## FIG. 26A

## FIG. 26B

## FIG. 26C

FIG. 27

FIG. 28

EP 4 329 432 A1

FIG. 29

EP 4 329 432 A1

FIG. 30

FIG. 31

EP 4 329 432 A1

FIG. 32

EP 4 329 432 A1

FIG. 33

# FIG. 34

EP 4 329 432 A1

FIG. 35

EP 4 329 432 A1

# FIG. 36

400F

210
CONSTANT CURRENT DRIVER

VIN — $V_{IN}$ — CONSTANT CURRENT DRIVER — $I_{OUT1}$ → n1

GND

101

n2

102

103

270

$V_{IN}$

280

SW3

LOW-VOLTAGE DETECTION CIRCUIT

260

SEL

262

264

PULSE WIDTH MODULATOR

L/Spwm

H/Spwm

SW1

SW2

n3

4

6

2

GND

EP 4 329 432 A1

FIG. 37

EP 4 329 432 A1

## INTERNATIONAL SEARCH REPORT

| International application No. |
| --- |
| **PCT/JP2022/018483** |

### A. CLASSIFICATION OF SUBJECT MATTER

*H05B 45/40*(2020.01)i; *B60Q 1/04*(2006.01)i; *F21S 41/663*(2018.01)i; *H05B 45/10*(2020.01)i; *H05B 45/345*(2020.01)i; *H05B 45/3725*(2020.01)i; *F21W 102/155*(2018.01)n; *F21Y 115/10*(2016.01)n
FI:    H05B45/40; F21S41/663; H05B45/345; H05B45/3725; B60Q1/04 E; H05B45/10; F21W102:155; F21Y115:10

According to International Patent Classification (IPC) or to both national classification and IPC

### B. FIELDS SEARCHED

Minimum documentation searched (classification system followed by classification symbols)

H05B45/40; B60Q1/04; F21S41/663; H05B45/10; H05B45/345; H05B45/3725; F21W102/155; F21Y115/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2020-95949 A (KOITO MFG CO LTD) 18 June 2020 (2020-06-18) paragraphs [0026]-[0029], [0031]-[0032], fig. 2 | 1 |
| A | | 2-20 |
| A | US 2011/0068702 A1 (CREE LED LIGHTING SOLUTIONS, INC.) 24 March 2011 (2011-03-24) paragraphs [0060]-[0063], fig. 2-5 | 1-20 |
| A | JP 2018-26267 A (KOITO MFG CO LTD) 15 February 2018 (2018-02-15) paragraphs [0029]-[0032], fig. 2 | 14-20 |
| A | JP 2010-114085 A (OSRAM SYLVANIA INC) 20 May 2010 (2010-05-20) entire text, all drawings | 14-20 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 June 2022** | **21 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/018483**

| Patent document cited in search report | | | Publication date (day/month/year) | Patent family member(s) | | Publication date (day/month/year) |
|---|---|---|---|---|---|---|
| JP | 2020-95949 | A | 18 June 2020 | US 2020/0187329 A1 paragraphs [0036]-[0039], [0041]-[0042], fig. 2 DE 102019218941 A1 FR 3089602 A1 CN 111372355 A | | |
| US | 2011/0068702 | A1 | 24 March 2011 | US 2011/0068701 A1 US 2012/0280621 A1 WO 2011/037774 A1 EP 2471347 A1 TW 201125439 A CN 102668718 A | | |
| JP | 2018-26267 | A | 15 February 2018 | US 2018/0049286 A1 paragraphs [0037]-[0040], fig. 2 CN 107734738 A | | |
| JP | 2010-114085 | A | 20 May 2010 | US 2010/0109557 A1 entire text, all drawings EP 2187705 A1 CA 2680663 A | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021020537 A